# FASCICULE DE BREVET EUROPEEN

(11) **EP 2 603 862 B1**
(45) Date de publication et mention de la délivrance du brevet: **22.10.2014**
(21) Numéro de dépôt: 11788328.0
(22) Date de dépôt: 10.08.2011
(51) Int. Cl.: G06F 17/14, G10L 25/48, G10L 25/24

(54) **PROCÉDÉ D'ANALYSE DE SIGNAUX FOURNISSANT DES FRÉQUENCES INSTANTANÉES ET DES TRANSFORMÉES DE FOURIER GLISSANTES ET DISPOSITIF D'ANALYSE DE SIGNAUX**
VERFAHREN ZUR ANALYSE VON SIGNALEN MIT AKTUELLEN FREQUENZEN UND GLEITENDEN FOURIER-TRANSFORMATIONEN SOWIE VORRICHTUNG ZUM ANALYSIEREN VON SIGNALEN
METHOD FOR ANALYZING SIGNALS PROVIDING INSTANTANEOUS FREQUENCIES AND SLIDING FOURIER TRANSFORMS, AND DEVICE FOR ANALYZING SIGNALS

(30) Priorité: 11.08.2010 BE 201000485
(43) Date de publication de la demande: 19.06.2013
(73) Titulaire: Reza, Yves, 2036 Cormondrèche (CH)
(72) Inventeur: Reza, Yves, 2036 Cormondrèche (CH)
(74) Mandataire: Cabinet Plasseraud
(86) Numéro de dépôt international: PCT/BE2011/000052
(87) Numéro de publication internationale: WO 2012/019251

(56) Documents cités:
- REILLY A ET AL: "An efficient algorithm for analytic signal generation for time-frequency distributions", PROCEEDINGS OF THE INTERNATIONAL CONFERENCE ON ACOUSTICS, SPEECH, AND SIGNAL PROCESSING (ICASSP), vol. iii, 19 avril 1994 (1994-04-19), pages III/165-III/168, XP010134253, DOI: DOI:10.1109/ICASSP.1994.390064 ISBN: 978-0-7803-1775-8
- KULDIP K PALIWAL ET AL: "FREQUENCY-RELATED REPRESENTION OF SPEECH", PROCEEDINGS EUROSPEECH 2003, 1 septembre 2003 (2003-09-01), pages 65-68, XP007006696,
- LYONS R. G.: "Understanding digital signal processing - 2nd ed.", 1 janvier 2004 (2004-01-01), Prentice Hall Professional Technical Reference, XP002628973, ISBN: 0131089897 cité dans la demande page 358 - page 380

## Description

### ARRIERE PLAN TECHNOLOGIQUE

Les procédés d'extractions d'informations à partir de signaux audio (signaux musicaux et signaux vocaux notamment) présentent une importance croissante. Ils sont notamment utilisés dans un nombre croissant d'applications telles que par exemple : reconnaissance vocale, analyse de signaux musicaux, détection en téléphonie de signaux de service en présence de signaux vocaux (DTMF dans la littérature anglo saxonne).

Plus précisément, ces applications comprennent une étape d'extraction d'informations de fréquence (typiquement : amplitude et évolution de l'amplitude pour des bandes étroites de fréquence extraites du signal), suivies d'étapes de reconnaissance ou d'identification faisant intervenir, souvent à titre principal, ces informations de fréquence. Ces deux étapes font appel à des techniques différentes : traitement du signal pour la première, reconnaissance des formes pour la deuxième. L'étape d'extraction d'informations de fréquence est souvent réalisée au moyen de Transformées de Fourier Glissantes (TFG : STFT (Short Term Fourier Transform dans la littérature anglo saxonne).

Dans ce contexte, la nature et la richesse des informations recueillies au cours de l'étape d'extraction d'informations de fréquence jouent un rôle très significatif pour l'étape suivante de reconnaissance ou d'identification, et donc pour la performance de telles applications dans leur totalité.

Le traitement des signaux audio se fait actuellement principalement au moyen de banques de filtres audio opérant en parallèle (selon le principe du « vocoder » selon la terminologie anglo saxonne) ou, de manière équivalente, de transformées de Fourier à fenêtre (c'est-à-dire opérant sur des signaux préalablement multipliés par une fenêtre). Le signal audio peut avoir fait l'objet de filtrages visant à éliminer ou à rehausser des fréquences, par exemple pour rehausser les fréquences aigues et/ou limiter la bande passante du signal qui fera l'objet du traitement. En revanche, ces traitements opèrent sur le signal audio usuel sans que celui-ci ait subi de changement de fréquence.

En conséquence, ces traitements opèrent sur la partie de la bande de fréquences audio qui contient l'essentiel des informations permettant la reconnaissance vocale ou l'identification de la source, c'est-à-dire une bande de fréquences comprenant la bande de fréquence allant de 300 Hz à 3.200 Hz (bande passante pour la téléphonie). Les informations de fréquence obtenues le sont à partir de fenêtres de temps dont la durée est de l'ordre de 10 à 20 millisecondes, durée pendant laquelle les signaux audio sont supposés être stationnaires (ou quasi stationnaires).

Cette hypothèse de stationnarité ou de quasi-stationnarité est dans l'ensemble bien respectée, mais empêche de bien voir les transitions entre périodes durant lesquelles le signal est stationnaire (ou quasi stationnaire).

Les informations associées à chaque fréquence recueillie au cours de l'extraction des fréquences sont des informations d'amplitude et de fréquence concernant :
a) Un ensemble de fréquences définies à l'avance (en fait des bandes de fréquences de largeur définies à l'avance centrées sur cet ensemble de fréquences définies)
b) Une fenêtre de temps donnée, qui varie typiquement par pas discontinus

Les étapes de reconnaissance ou d'identification utilisent généralement le fait que à un instant donné, ou durant des instants successifs, un ensemble de fréquences bien définies sont présentes ensemble.

Dans cette optique, les facteurs suivants sont donc particulièrement importants :
a) la précision avec laquelle les fréquences sont détectées (la largeur de la bande de fréquences centrée autour de chaque fréquence pré définie) est un paramètre important : au moins pour les fréquences basses, notamment inférieures à 800 Hertz environ, il est important que ces fréquences soient connues avec la meilleure précision possible à la fois pour l'amplitude et la phase
b) la richesse des informations associées à chaque fréquence ainsi détectée (par exemple : amplitude, fréquence instantanée, variations dans le temps de ces informations)

L'objet de la présente invention est d'obtenir avec des moyens simples et peu coûteux de telles informations associées à la fréquence, et de les obtenir en continu.

De telles informations de fréquences peuvent permettre d'améliorer les performances des applications comprenant cette étape d'extraction de fréquence.

Il peut par ailleurs être avantageux de disposer d'informations de Transformée de Fourier Glissante (TFG), en parallèle des informations de fréquence et d'amplitude instantanées. En effet, il est avantageux dans certaines applications de pouvoir faire une synthèse du signal analysé, en particulier après que le signal analysé ait fait l'objet de transformations effectuées dans le domaine fréquentiel, et les conditions d'invertibilité de la TFG sont connues.

Il est connu que une manière d'analyser l'effet d'une TFG sur un signal est de constater que effectuer une TFG est équivalent à faire passer le signal à travers un banc de filtres passe bande, ce que permet l'invention. On constate ensuite que l'invention permet de se mettre dans les conditions dans laquelle la TFG est inversible.

On constate enfin, en partant des observations précédentes selon lesquelles l'invention permettait de réaliser une TFG inversible, qu'il est possible d'utiliser l'invention pour réaliser une transformée de Hilbert.

En ce qui concerne les signaux électriques que l'invention peut traiter, on constate que les signaux audio sont un cas particulier de signaux électriques générés par un capteur (CA) et représentatifs d'ondes physiques se propageant dans un milieu physique. A titre d'exemple de telles ondes on peut citer : les ondes acoustiques, les ondes électromagnétiques, les ondes sismiques, les ondes ultra sonores, les ondes sonores dans un milieu autre que l'air (eau, corps humain ou animal).

Dans le cadre de la présente invention, on s'intéressera plus particulièrement aux signaux générés par les capteurs (CA) qui sont des signaux électriques dits, « réels », par opposition à des signaux dits « complexes », c'est-à-dire des couples de signaux réels.

### OBJECTIF DE L'INVENTION

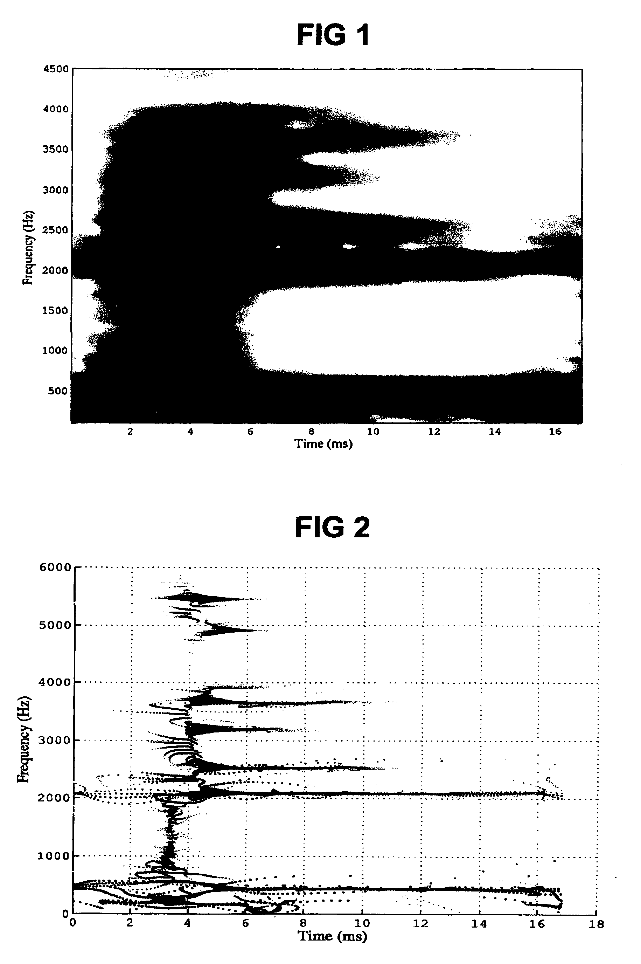

L'objectif de l'invention est de pouvoir extraire d'un signal, tel qu'un signal audio ou un signal électrique généré par un capteur (CA) et représentatif d'ondes physiques :
a) une analyse temps-fréquence dont la richesse et la qualité sont comparables à celles obtenues par la méthode de la réallocation (voir Figures 1 et 2)
b) en synchronisation avec le signal étudié
c) en utilisant des plates formes de calcul à faible coût et permettant de réaliser des systèmes embarqués et autonomes
d) qui peut être rapprochée d'une analyse classique par Transformée de Fourier Glissante.

### RESUME DE L'INVENTION

Avec cet objectif, comme il sera vu ultérieurement, l'invention propose un procédé d'analyse d'un signal initial (SI), représentatif d'une onde qui se propage dans un milieu physique, pour fournir des paramètres caractéristiques dudit signal initial, ledit procédé étant mis en oeuvre sur une plate-forme (PC) de calcul, par un banc de filtres mettant en oeuvre une pluralité (NF) de filtres sélectifs en fréquence (FSF), de fréquences centrales (FN) distinctes, opérant sur des échantillons d'un signal d'entrée (SE) obtenu par échantillonnage à une fréquence d'échantillonnage (FE) constante à partir du signal initial (SI), comprenant les étapes suivantes:
a) Des opérations de pré-traitement pour transformer les échantillons du signal d'entrée (SE) en une séquence d'échantillons (SM)
b) Une pluralité (NF) d'opérations de translation de fréquence (TFE), correspondant chacune à une des fréquences (FN) analysées de la pluralité (NF) des fréquences, adaptée chacune à changer cette fréquence (FN) en la fréquence (F4),égale au quart de la fréquence d'échantillonnage (FE), et fournissant une pluralité (NF) de signaux (ST) translatés en fréquence vers la fréquence (F4) à partir de la séquence d'échantillons (SM)
c) Une pluralité (NF) d'opérations de filtrage sélectif en fréquence (FSE), portant sur chacun des signaux (ST) translatés en fréquence de la pluralité (NF) de ces signaux, et réalisée chacune à la fréquence (F4) et fournissant une pluralité (NF) de signaux filtrés (SF), chacun de ces signaux filtrés (SF) possédant une bande de fréquence (BF) centrée sur la fréquence (F4)
d) Une pluralité (NF) d'opérations (EXP) d'extractions de paramètres (PA) à partir de la pluralité des signaux filtrés (SF), incluant pour chacun des signaux filtrés (SF) l'estimation d'au moins un des paramètres parmi :
   - la phase instantanée (PI)
   - l'amplitude instantanée (AI)
   - la fréquence instantanée (FI)
   - la Transformée de Fourier Glissante (TFG)

   Dans des mises en oeuvre préférées de l'invention, on peut utiliser l'une ou l'autre des dispositions suivantes :
   - l'étape a) comprend un filtrage fréquentiel et/ou un sur-échantillonnage adaptés pour limiter la fréquence maximum (FB) du signal d'entrée (SE) à une fréquence maximum (FB) inférieure à la dite fréquence (F4)
   - la Transformée de Fourier Glissante (TFG) est réalisée au moyen de l'étape supplémentaire suivante :
e) Une pluralité (NF) d'opérations de translation de fréquence (TF0), réalisées sur la pluralité (NF) de signaux filtrés (SF) réels possédant une bande de fréquence (BF) centrée sur la fréquence (F4), adaptée chacune à changer la fréquence (F4) en la fréquence zéro
   - l'étape c) consistant en la pluralité (NF) d'opérations de filtrage sélectif en fréquence (FSE) est réalisée en deux étapes :
      c1) Une étape de pré-filtrage (PFC) réalisée sur le signal d'entrée (SE) réel avant toute opération de translation en fréquence (TFE)
      c2) Une étape de filtrage en fréquence (FFR) réalisée sur chacun des signaux (ST) réels translatés en fréquence de la pluralité (NF) de ces signaux
   - l'étape de pré-filtrage (PFC) est réalisée au moyen d'un filtre en peigne (PE) ou d'une succession de (NP) filtres en peigne (PE), et étape de filtrage en fréquence (FFR) est réalisée au moyen d'une pluralité de résonateurs (RS4) ou d'une pluralité de successions de (NR) résonateurs (RS4) chacun accordé sur la fréquence (F4), et dans lequel :
      i) Pour chacune des fréquences (FN) analysées, le nombre (NP) de filtres en peigne d'une succession de (NP) filtres en peigne (PE) est égal au nombre (NR) de résonateurs d'une succession de (NR) résonateurs (RS4)
      ii) les zéros en fréquence du filtre en peigne (PE) incluent chacune des fréquences (FN) analysées de la pluralité (NF) des fréquences
      iii) Chaque opération de translation de fréquence (TFE), correspondant chacune à une des fréquences (FN) analysées de la pluralité (NF) des fréquences, est adaptée à changer les zéros en fréquence du filtre en peigne (PE) en la fréquence (F4) des résonateurs (RS)
   - des résonateurs (RSD), accordés sur des fréquences (FD) voisines de (F4) opèrent en parallèle avec un résonateur (RS4) afin de réaliser par des moyens fréquentiels un fenêtrage temporel, et chaque résonateur (RSD) accordé sur une fréquence (FD) voisine de (F4) est remplacé par un résonateur (RS4) précédé d'une opération de translation de fréquence (TFD), adaptée pour translater la fréquence (F4) à la fréquence (FD) de chaque résonateur (RSD) remplacé et suivi d'une opération de translation de fréquence (TFC), adaptée pour translater la fréquence (FD) à la fréquence (F4) ou la fréquence zéro
   - les bandes passantes (BF) utilisées dans les opérations de filtrage sélectif en fréquence (FSE) ont une largeur adaptée pour que les séquences d'échantillons filtrés (SF) produites en sortie de ces opérations pour chacune des fréquences (FN) de la pluralité (NF) de fréquences contiennent chacune essentiellement une seule composante fréquentielle du signal d'entrée (SE)
   - la fréquence instantanée (FI) d'un signal filtré (SF) est mesurée à partir de la différence de mesures successives de la phase instantanée (PI) du signal filtré (SF)
   - l'ensemble des opérations est effectué à une vitesse adaptée pour permettre un traitement en continu de l'ensemble des fréquences (FN) de la pluralité des fréquences (NF)
Il sera par ailleurs avantageux de réaliser un dispositif d'analyse d'un signal comprenant :
a) un capteur (CA) générant un signal initial (SI)
b) une plate-forme de calcul (PC) reliée au capteur (CA) et adaptée pour mettre en oeuvre le procédé selon l'une quelconque des revendications précédentes, en particulier tel que la plate-forme de calcul (PC) est adaptée à des calculs en virgule fixe

L'invention se rapporte également à un procédé de filtrage fréquentiel sélectif mettant en oeuvre une pluralité (NF) de filtres sélectifs en fréquence (FS) fonctionnant en parallèle sur cette même pluralité (NF) de fréquences (FN) distinctes, possédant chacun une bande passante (BF), et opérant sur des échantillons d'un signal d'entrée (SE), échantillonné à une fréquence d'échantillonnage (FE), dont la bande passante est comprise entre une fréquence minimum (FA) et une fréquence maximum (FB), et comprenant les étapes suivantes :
a) Une opération de mémorisation en entrée (MEN) mémorisant en continu les échantillons du signal d'entrée (SE)
b) Une opération (ANA) d'analyse pour une des fréquences (FN) de la pluralité (NF) de fréquences, comprenant les étapes :
   b1) Lecture (LM) d'une séquence (SM) d'échantillons du signal d'entrée (SE) mémorisés lors de l'opération (MEN), de longueur (NM) échantillons
   b2) Translation de fréquence (TFE) appliquée à la séquence (SM) d'échantillons du signal d'entrée (SE), produisant une nouvelle séquence (ST) d'échantillons translatés en fréquence du signal d'entrée (SE), de même longueur (NM)
   b3) Filtrage sélectif en fréquence (FSE) en fréquence appliquée à la séquence (ST) d'échantillons translatés en fréquence du signal d'entrée (SE), avec une bande passante (BF), produisant des séquences d'échantillons filtrés (SF), de même longueur (NM)
c) Une opération de libération (LEN) de la ressource mémoire attribuée à la séquence (SM) d'échantillons du signal d'entrée (SE) de longueur (NM) lors de l'opération de mémorisation en entrée (MEN)
   caractérisé en ce que :
   aa) L'opération d'analyse (ANA) est effectuée pour plusieurs des fréquences (FN) de la pluralité de fréquences (NF), après l'opération de mémorisation en entrée (MEN) et avant l'opération de libération (LEN) de la ressource mémoire attribuée à la séquence (SM) d'échantillons du signal d'entrée (SE) de longueur (NM)
   bb) L'opération de translation de fréquence (TFE) appliquée à chacune des fréquences (FN) analysées de la pluralité (NF) des fréquences est adaptée à changer cette fréquence (FN) en une fréquence constante (F4), sensiblement égale à un quart de la fréquence d'échantillonnage (FE) des échantillons du signal d'entrée (SE)
   cc) L'opération de filtrage sélectif en fréquence (FSE) est effectuée à une fréquence constante (F4)

Dans des mises en oeuvre préférées de l'invention, on peut utiliser l'une ou l'autre des dispositions suivantes :
- l'opération (ANA) d'analyse est effectuée à une vitesse adaptée pour permettre un traitement en continu de l'ensemble des fréquences (FN) de la pluralité des fréquences (NF)
- les bandes passantes (BF) utilisées dans les opérations de filtrage sélectif en fréquence (FSE) ont une largeur adaptée pour que les séquences d'échantillons filtrés (SF) produites en sortie de ces opérations pour chacune des fréquences (FN) de la pluralité (NF) de fréquences contiennent chacune essentiellement une seule composante fréquentielle du signal d'entrée (SE)
- le procédé est précédé d'une opération (CFE) de changement de la fréquence d'échantillonnage du signal d'entrée
- le procédé est précédé d'une opération (FIS) de filtrage sélectif en fréquence appliquée à un signal initial (SI) pour le transformer en le signal d'entrée (SE), la bande passante du signal initial (SI) étant plus large que celle du signal d'entrée (SE)
- le procédé est suivi d'une étape (EXP) d'extraction des paramètres (PA) des séquences d'échantillons filtrés (SF) pour chacune des fréquences (FN) de la pluralité (NF) de fréquences analysée
- les paramètres (PA) extraits des séquences d'échantillons filtrés (SF) incluent l'amplitude instantanée (AI) du signal filtré (SF)
- les paramètres (PA) extraits des séquences d'échantillons filtrés (SF) incluent la fréquence instantanée (FI) du signal filtré (SF)
- les paramètres (PA) extraits des séquences d'échantillons filtrés (SF) incluent la phase instantanée (PI) du signal filtré (SF)
- la fréquence instantanée (FI) d'un signal filtré (SF) est mesurée à partir de la différence de mesures successives de la phase instantanée (PI) du signal filtré (SF)
- les paramètres (PA) extraits des séquences d'échantillons filtrés (SF) incluent les informations nécessaires pour calculer le cepstre réel (CR) du signal d'entrée (SE)
- les paramètres (PA) extraits des séquences d'échantillons filtrés (SF) incluent les informations nécessaires pour calculer le cepstre complexe (CC) du signal d'entrée (SE)

### Références relatives à l'invention

Dans le domaine du traitement du signal et des filtres utilisables pour extraire des informations audio, on peut citer les références suivantes :
Référence 1. Richard G. Lyons "Understanding Digital Signal Processing" Second edition, 2004, Prentice Hall éditeur,
Référence 2. Chapitre 6 (Nawab, Quatieri "Short Term Fourier Transform") du livre "Advanced topics in Signal Processing" ("Edited by Lim, Oppenheim", Prentice Hall éditeur, 1988)
Référence 3. Chapitre 8 ("Communication Systems") du livre "Signal and Systems" de Alan V. Oppenheim et Alan S. Wilsky, Second edition, 1997, Prentice Hall éditeur
Référence 4. Kuldik K Paliwal et al "Frequency related representation of speech" Proceedings Eurospeech 2003 (2003-09-01) Pages 65-68

Reference 5. Reilly A et al "An efficient algorithm for analytic signal generation for time-frequency distributions" Proceedings ICASSP 1994 (1994-04-19) Pages III-165-III-168.

### PRINCIPAUX ELEMENTS TECHNIQUES RELATIFS A L'INVENTION

### a) Limitations des méthodes actuelles

Les analyses temps-fréquence traditionnelles , telles que le spectrogramme traditionnellement associé à la transformée de Fourier à fenêtre (« Short Time Fourier Transform » dans la littérature anglo saxonne) se heurtent souvent à une limitation bien connue, parfois appelée « principe d'incertitude » : plus la précision en fréquence est élevée, plus le temps nécessaire pour disposer de cette information est élevé.

La transformée de Fourier standard, en effet, introduit des limitations qui font qu'il n'est pas possible d'avoir simultanément une bonne précision en temps et une bonne précision en fréquence. Par exemple, avec une fenêtre de temps d'une durée de 3 à 4 millisecondes, la résolution en fréquence est au mieux de 300 Hz ou 250 Hz respectivement. On constate ainsi que les vues temps fréquence (appelées généralement « spectrogrammes ») manquent de netteté et de précision.

Cette limitation peut être levée avec la technique dite de « réallocation » (« reassignment dans la littérature anglo saxonne) dans laquelle on constate qu'il est possible d'augmenter de manière très sensible la netteté et la précision des spectrogrammes. Ces calculs sont toutefois assez lourds, et nécessitent notamment des calculs en virgule flottante pour calculer les ratios utilisés pour la réallocation.

D'autres techniques sont possibles, et notamment l'utilisation d'ondelettes (« wavelets » dans la littérature anglo saxonne). La pratique montre toutefois que pour obtenir de bons résultats il est nécessaire d'utiliser des fréquences de travail très nettement supérieures à celles du signal analysé.

### b) Les supports de calculs préférentiels pour l'invention

La présente invention a notamment pour but de permettre de réaliser sur des plates-formes de calcul (PC) particulièrement économiques des traitements du signal particulièrement performants qui nécessitaient jusqu'à présent des plates formes de calcul peu économiques.

Les plates-formes de calcul particulièrement visées par la présente invention sont les suivantes :
a) Microcontrôleurs de bas ou de moyen de gamme (8 bits haut de gamme, 16 bits bas et moyen de gamme)
b) Composants logiques programmables (« FPGA » dans la littérature anglo saxonne), en particulier mais de manière non exclusive les FPGA à faible coût, qui travaillent avec des fréquences d'horloge de l'ordre de 100 Mhz
c) Circuits intégrés dédiés (« ASIC » dans la littérature anglo saxonne)

On remarquera que ces plates formes de calcul permettent de réaliser des systèmes autonomes et embarqués, par exemple alimentés par piles ou accumulateurs électriques.

Par ailleurs, ces plates formes ont des fréquences de travail très élevées (des fréquences d'horloge de plusieurs dizaines de Mhz ou plus), mais ne sont pas dotées en standard de possibilités de calculs en virgule flottante. Il est toujours possible de réaliser des calculs en virgule flottante sur ces plates-formes, mais ce type de calcul est très consommateurs en ressources (en temps ou en surface de circuit utilisée).

En conséquence, la solution habituellement utilisée est d'effectuer les calculs en virgule fixe. Toutefois, dans la plupart des cas, il s'ensuit une perte de précision significative.

Au contraire, l'invention utilise des techniques particulières qui permettent de s'affranchir de la plupart des contraintes des calculs en virgule fixe.

La liste précédente de plates-formes est donnée à titre indicatif et d'autres types de plates formes de calcul peuvent aussi être utilisées.

### c) Les principaux "types de signaux concernes par l'invention

L'invention permet notamment de traiter d'une manière particulièrement avantageuse les signaux dont la fréquence utile est inférieure d'au moins un ordre de grandeur à la fréquence de travail des plates-formes de calcul.

Ces signaux incluent donc les signaux audio (qui sont échantillonnés, suivant les applications, à des fréquences variant typiquement de 8 Khz (téléphonie) à 96 Kz (haute fidélité professionnelle).

Des signaux de toute nature, provenant par exemple de capteurs médicaux (sons relatifs au corps notamment) ou industriels, dont la fréquence est comparable ou inférieure à celle des signaux audio peuvent être traités avantageusement par l'invention.

La liste précédente de types de signaux est donnée à titre d'exemple et d'autres types de signaux pourront faire l'objet de traitements dans le cadre de l'invention.

### e) Remarque sur l'analyse temps fréquence

Un point important mis en évidence dans la méthode de réallocation est le suivant : la précision de localisation d'un signal dans le plan temps-fréquence peut être aussi bonne que l'on veut si, dans un domaine donné du plan temps fréquence, il n'existe qu'une seule composante fréquentielle du signal dans ce domaine. Mais s'il existe plus d'une composante dans un domaine donné, les limites du principe d'incertitude s'appliquent alors. Il est donc nécessaire de distinguer d'une part la précision avec laquelle il est possible de localiser un point du plan temps fréquence, et d'autre part les possibilités de séparer deux points voisins de ce plan temps fréquence.

Cette remarque est à rapprocher de la remarque suivante selon laquelle la notion de fréquence instantanée d'un signal n'a de sens que si ce signal ne comporte qu'une seule composante fréquentielle, et que dans le cas contraire sa valeur peut fluctuer dans le temps de manière très significative même si les composantes fréquentielles en jeu ont une fréquence constante dans le temps.

### PRESENTATION DES FIGURES

D'autres caractéristiques et avantages de l'invention apparaîtront au cours de la description qui va suivre, donnée à titre d'exemple non limitatif, en références aux figures annexées dans lesquelles :
La Figure 1 montre un exemple de spectrogramme de signal audio issu d'une transformée de Fourier standard, avant opération de réallocation.
La Figure 2 montre ce même spectrogramme de signal audio issu d'une transformée de Fourier standard, après opération de réallocation.
Les Figures 3, 4, 5, 6 contiennent des vues sous forme de bloc diagramme d'ensemble de l'invention.
Les Figures 7, 8, 11, 12, 13, 14 et 15 représentent des représentations temporelles de signaux traités dans le cadre du procédé objet de l'invention.
Les Figures 9, 10 et 16 décrivent les caractéristiques d'un filtre fréquentiel sélectif qu'il est avantageux d'utiliser dans le cadre de l'invention.
La Figure 17 montre la réponse impulsionnelle d'un autre filtre fréquentiel sélectif qu'il est avantageux d'utiliser dans le cadre de l'invention.
Les Figures 18 et 19 expliquent la forme constatée sur la Figure 16.
Les Figures 20, 21, 22 et 23 décrivent des architectures possibles pour réaliser les actions de filtrage fréquentiel.
Les Figures 24, 25 et 26 proviennent de la Référence 2 et décrivent des points relatifs à la TFG qui sont en rapport avec l'invention.
La Figure 27 compare le calcul d'une Transformée de Fourier Glissante à des calculs effectués dans le cadre de l'invention.
La Figure 28 est un tableau qui compare les nombres de multiplications et d'additions pour réaliser une Transformée de Fourier Glissante selon l'invention et selon une méthode classique.

### DESCRIPTION DETAILLEE DE L'INVENTION

Sur les différentes figures, on a conservé les mêmes références pour désigner des éléments identiques ou similaires.

### 1) Vue d'ensemble de l'invention

Le procédé selon l'invention a pour objectif la mise en oeuvre une analyse par un banc de filtres mettant en oeuvre une pluralité (NF) de filtres sélectifs en fréquence (FS), de fréquences centrales (FN) distinctes, opérant sur des échantillons d'un signal d'entrée (SE) réel, échantillonné à une fréquence d'échantillonnage (FE), fournissant des informations de fréquence et d'amplitude instantanées ainsi que des informations permettant de réaliser simultanément une Transformée de Fourier Glissante.

Ce procédé comprend en particulier les 4 étapes suivantes :
a) Des opérations de pré-traitement pour transformer les échantillons du signal d'entrée (SE) en une séquence d'échantillons (SM)
b) Une pluralité (NF) d'opérations de translation de fréquence (TFE), correspondant chacune à une des fréquences (FN) analysées de la pluralité (NF) des fréquences, adaptée chacune à changer cette fréquence (FN) en la fréquence (F4),égale au quart de la fréquence d'échantillonnage (FE), et fournissant une pluralité (NF) de signaux (ST) translatés en fréquence vers la fréquence (F4) à partir de la séquence d'échantillons (SM)
c) Une pluralité (NF) d'opérations de filtrage sélectif en fréquence (FSE), portant sur chacun des signaux (ST) translatés en fréquence de la pluralité (NF) de ces signaux, et réalisée chacune à la fréquence (F4) et fournissant une pluralité (NF) de signaux filtrés (SF), chacun de ces signaux filtrés (SF) possédant une bande de fréquence (BF) centrée sur la fréquence (F4)
d) Une pluralité (NF) d'opérations (EXP) d'extractions de paramètres (PA) à partir de la pluralité des signaux filtrés (SF), incluant pour chacun des signaux filtrés (SF) l'estimation d'au moins un des paramètres parmi :
   - la phase instantanée (PI)
   - l'amplitude instantanée (AI)
   - la fréquence instantanée (FI)
   - la Transformée de Fourier Glissante (TFG)
   et l'étape a) peut comprendre un filtrage fréquentiel et/ou un sur-échantillonnage adaptés pour limiter la fréquence maximum (FB) du signal d'entrée (SE) à une fréquence maximum (FB) inférieure à la dite fréquence (F4), et aussi la Transformée de Fourier Glissante (TFG) est réalisée au moyen de l'étape supplémentaire suivante :
e) Une pluralité (NF) d'opérations de translation de fréquence (TF0), réalisées sur la pluralité (NF) de signaux filtrés (SF) réels possédant une bande de fréquence (BF) centrée sur la fréquence (F4), adaptée chacune à changer la fréquence (F4) en la fréquence zéro

Les aspects techniques correspondant à ces étapes sont décrites dans les parties suivantes de la présente section décrivant de manière détaillée l'invention :

| | |
|---|---|
| Parties 2) et 3) | : Etapes a), b) et c) |
| Parties 4,6,8 | : Etape b) |
| Parties 5,7 | : Etape a) |
| Parties 9,10,10bis, 11 | : Etape c) |
| Parties 12,13, 14 | : Etapes d) |
| Partie 15,16 | : Toutes les étapes |

Le procédé selon l'invention peut également avoir pour objectif la mise en oeuvre d'une pluralité (NF) de filtres sélectifs en fréquence (FS) fonctionnant en parallèle sur cette même pluralité (NF) de fréquences (FN) distinctes, suivie d'une extraction des paramètres des signaux en sortie de chacun de ces filtres. Ce procédé comprend les 4 phases suivantes :
1) Mémorisation en entrée du signal numérisé
2) Analyse du signal d'entrée, portant sur une séquence d'échantillons du signal et fournissant pour chaque séquence d'échantillons du signal et chaque fréquence étudiée un signal translaté en fréquence et filtré
3) Libération de la mémoire utilisée pour une séquence d'échantillons lorsque toutes les analyses portant sur cet échantillon ont été réalisées
4) Extraction des paramètres du signal translaté en fréquence et filtré

Les composantes de ces 4 phases vont être décrites successivement, ainsi que les actions qui peuvent précéder ces 4 phases.

### 2) La mémorisation en entrée du signal numérisé et la libération de la mémoire

Le procédé selon l'invention traite en entrée des échantillons d'un signal numérisé (SE), échantillonné à une fréquence d'échantillonnage (FE).

Ces échantillons font l'objet d'une opération de mémorisation en entrée (MEN), mémorisant en continu les échantillons d'un signal numérisé (SE), dans une mémoire numérique (MN). Cette mémoire numérique (MN) fera ensuite l'objet d'opérations (LM) de lecture, autant de fois que nécessaire pour traiter la pluralité (NF) de fréquences (FN) distinctes étudiées. Des lectures multiples d'une mémoire numérique (MN) ne posent pas de problème lorsque la fréquence d'horloge de la mémoire est significativement supérieure à la fréquence d'échantillonnage des signaux numérisés.

La mémoire utilisée peut être une mémoire interne à la plate forme de calcul ou externe (par exemple pour un FPGA : mémoire interne au composant ou composant externe de mémoire vive).

Lorsque toutes les opérations (LM) de lecture nécessaires auront été effectuées, une opération de libération (LEN) de la ressource mémoire attribuée à la séquence (SM) d'échantillons du signal d'entrée (SE) de longueur (NM) lors de l'opération de mémorisation en entrée (MEN) sera réalisée au cours d'une opération de libération (LEN).

### 3) L'opération d'analyse (ANA)

L'opération (ANA) d'analyse porte sur chacune des fréquences (FN) analysées, et comprend les étapes suivantes :
b1) Lecture d'une séquence (SM) d'échantillons (examinée ci-dessus)
b2) Translation de fréquence (TFE) (examinée ci-dessous)
b3) Filtrage sélectif en fréquence (FSE) (examinée ci-dessous)

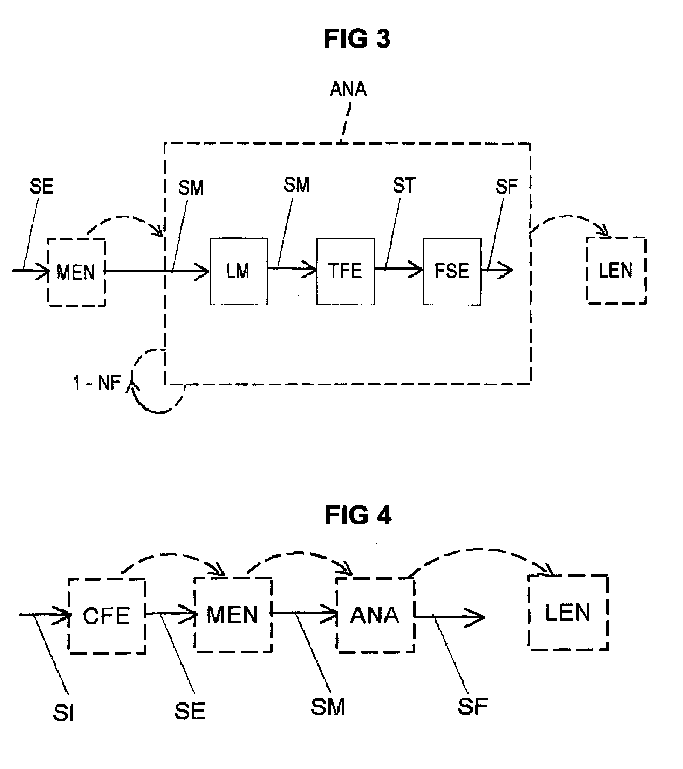

La Figure 3 est une vue d'ensemble sous forme de bloc-diagramme du procédé constitué des étapes (MEN), (ANA) et (LEN), qui montre ces étapes ainsi que les différents signaux concernés.

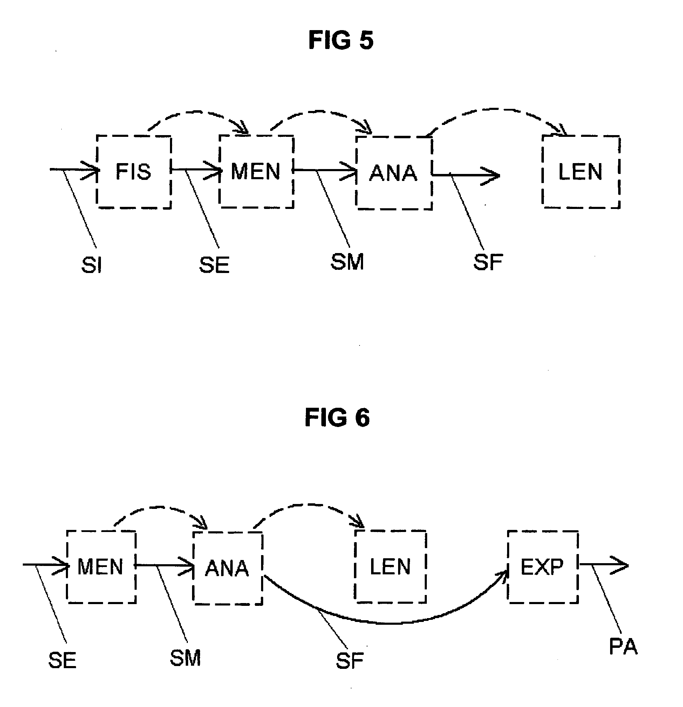

La Figure 4 est une vue résumée sous forme de bloc-diagramme du procédé de la Figure 3, précédé d'une opération (CFE) de changement de fréquence, qui sera décrite ci-après. La Figure 5 est une vue résumée sous forme de bloc-diagramme du procédé de la Figure 3, précédé d'une opération (FIS) de filtrage sélectif en fréquence, qui sera décrite ci-après.

La Figure 6 est une vue résumée sous forme de bloc-diagramme du procédé de la Figure 3, suivi d'une opération (EXP) d'extraction des paramètres du signal, qui sera décrite ci-après.

### 4) La translation en fréquence (TFE)

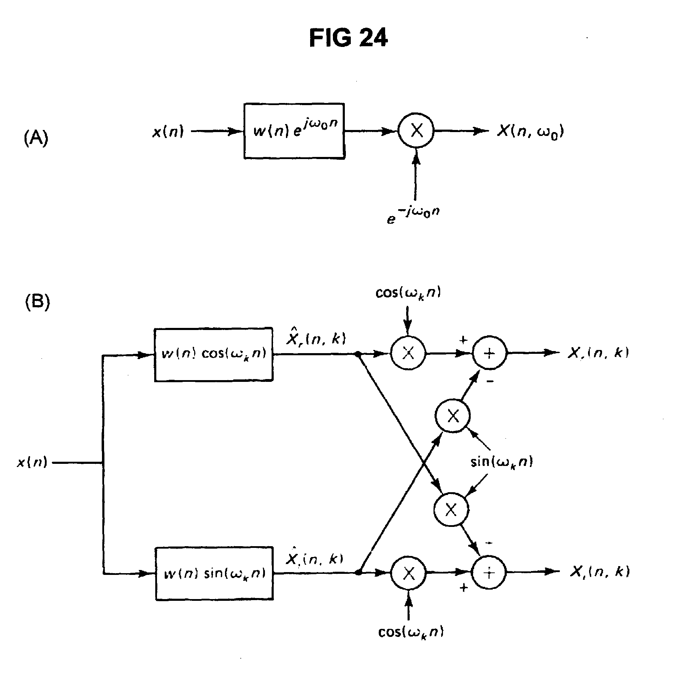

Pour chacune des fréquences (FN) de la pluralité (NF) de fréquences, les échantillons du signal d'entrée mémorisés (SM) dans la mémoire numérique (MN) font l'objet d'une action (TFE) de changement de fréquence par l'opération classique de multiplication avec un signal numérisé, de préférence sinusoïdal, de fréquence adaptée, produit par un oscillateur local (OL), produisant une séquence (ST) d'échantillons translatés en fréquence du signal d'entrée (SE). La Référence 3 détaille les principales modalités pour réaliser des changements de fréquence (dans le cadre d'opérations appelées « amplitude modulation ») au moyen d'ondes sinusoïdales réelles ou au moyen d'exponentielles complexes. La Figure 24 (dont la partie (A) reprend la Figure 6.7 et la partie (B) la Figure 6.16 de la Référence 2) décrit dans sa partie (B) la mise en oeuvre avec des opérations réelles (sinus et cosinus) d'un changement de fréquence opéré sur un complexe par multiplication avec une exponentielle complexe, représentée dans la partie (A).

On remarque une inexactitude sur les signes - dans la partie (B), car la règle de multiplication des nombres complexes n'est pas respectée : (a+ib) x (c+id) = (ac-bd)+i(ad+bc).

Il pourra être avantageux, et analogue aux fréquences d'analyse utilisées dans les Transformées de Fourier, d'utiliser comme fréquences (FN) de la pluralité (NF) de fréquences les fréquences normalisées (fn) égales à (2 x PI x (n/N)), n pouvant varier de 0 à N-1, correspondent à des fréquences en Hertz de 0 à ((N-1)/N) x (FE)), (FE) étant la fréquence d'échantillonnage du signal, et (PI) le nombre connu à peu près égal à 3,14159265.

### Translation par un Signal réel / Signal complexe

Il existe deux grandes modalités pour effectuer ce changement de fréquence. En effet, Le changement de fréquence peut s'opérer de manière classique par une multiplication :
M1) Réelle (une seule multiplication pour chaque échantillon du signal d'entrée réel)
M2) Complexe (deux multiplications par deux signaux en quadrature pour chaque échantillon du signal d'entrée réel)

Le changement de fréquence complexe (avec deux signaux en quadrature) est plus précis (pas de fréquence image), mais nécessite en revanche une charge de calcul supérieure pour le changement de fréquence et pour le filtrage ultérieur du signal.

Le changement de fréquence réel nécessite moins de calculs, mais est susceptible de générer des fréquences image (deux fréquences de départ différentes aboutissent à la même fréquence translatée).

### Objectif de l'action (TFE) de changement de fréquence

L'objectif de l'action (TFE) de changement de fréquence est de translater le signal en fréquence afin de l'amener à la fréquence (F4), égale au quart de la fréquence d'échantillonnage du signal, et cela quelle que soit la fréquence (FN) analysée. L'action (TFE) traite en entrée pour chaque fréquence (FN) analysée, une séquence (SE) du signal d'entrée et génère une séquence (ST) d'échantillons translatés en fréquence autour de la fréquence (F4), de même longueur (NM). La fréquence (F4) est dans le principe égale au quart de la fréquence d'échantillonnage (FE). Dans la pratique, cette fréquence (F4) pourra être sensiblement égale à cette valeur théorique dans la mesure où les effets observés avec cette valeur théorique sont aussi utilisables dans le cadre de l'application dans laquelle le procédé suivant l'invention est utilisé.

Comme il sera vu par la suite, la translation vers la fréquence (F4) amène des avantages particuliers à la fois en ce qui concerne l'action de filtrage sélectif en fréquence et la richesses des paramètres qu'il est possible d'extraire du signal d'entrée après translation en fréquence et filtrage.

### Modalités de réalisation de l'action (TFE) de changement de fréquence

Comme il a été vu ci-dessus, l'opération de changement de fréquence peut être réalisée en utilisant des signaux réels ou complexes. Les calculs ci-après permettent de montrer les différences résultant de l'utilisation de signaux réels ou complexes.

Dans la suite du document, on adoptera les notations suivantes :
a) exp<> pour désigner une exponentielle (exemple : exp<ix(PI)> = -1 = exponentielle de i X PI)
b) une fréquence (F), échantillonnée avec une fréquence d'échantillonnage (FE) et un taux d'échantillonnage TE (le temps écoulé entre deux échantillons, soit l'inverse de la fréquence d'échantillonnage), exprimée en Hertz est représentée par l'une des deux séquences numériques suivantes, indexées par l'indice N:
   - la sinusoïde réelle : cos(2xPIxFxTExN)
   - l'exponentielle complexe : exp<2xPIxFxTExN> selon que l'on fait référence à un signal réel (sinusoïde) ou à un signal complexe (exponentielle complexe)

On sait aussi que l'on a la relation : $cos \left(2⁢xPIxFxTExN\right) = \left(1/2\right) x \left(exp<2⁢xPIxFxTExN>+exp<2⁢xPIx\left(-F\right)⁢xTExN>\right) )$
(une onde réelle de fréquence (F) définie par un cosinus est la demi-somme d'une exponentielle complexe à la fréquence (F) et d'une exponentielle complexe à la fréquence (-F))

Avec ces notations, les changements de fréquence correspondent aux équations suivantes :
a) Signal réel (sinusoïde de fréquence (FE)) faisant l'objet d'une translation de fréquence par multiplication avec un autre signal réel (sinusoïde de fréquence (FN)) : cos(2xPIxFExTExN) x cos(2xPIxFNxTExN) = $\begin{matrix}\left(1/2\right) & x & \left(exp<2⁢xPIxFExTExN>+exp<2⁢xPIx\left(-FE\right)⁢xTExN>\right) ) x \\ \left(1/2\right) & x & \left(exp<2⁢xPIxFNxTExN>+exp<2⁢xPIx\left(-FN\right)⁢xTExN>\right) ) = \\ \left(1/4\right) & x & ( exp < 2 ⁢ xPIx ⁢ \left(FE+FN\right) ⁢ xTExN > + exp < 2 ⁢ xPIx ⁢ \left(-FE+-FN\right) ⁢ xTExN > + \\ & & exp < 2 ⁢ xPIx ⁢ \left(FE-FN\right) ⁢ xTExN > + exp < 2 ⁢ xPIx ⁢ \left(-FE+FN\right) ⁢ xTExN ) = 0 \\ \left(1/2\right) & x & \left(cos\left(2⁢xPIx⁢\left(FE+FN\right)⁢xTExN\right)+cos\left(2⁢xPIx⁢\left(FE-FN\right)⁢xTExN\right)\right)\end{matrix}$
   On retrouve bien le résultat connu selon lequel le mélange par multiplication de deux sinusoïdes réelles fournit un signal réel contenant la somme et la différence des fréquences.
b) Signal réel (sinusoïde de fréquence (FE)) faisant l'objet d'une translation de fréquence par multiplication avec un signal complexe (exponentielle complexe de fréquence (+FN)) : cos(2xPIxFExTExN) x exp<2xPIxFNxTExN> = $\begin{matrix}\left(1/2\right) x \left(exp<2⁢xPIxFExTExN>+exp<2⁢xPIx\left(-FE\right)⁢xTExN>\right) ) x ( exp < 2 ⁢ xPIxFNxTExN > = \\ \left(1/2\right) x \left(exp<2⁢xPIx⁢\left(FE+FN\right)⁢xTExN>+exp<2⁢xPIx⁢\left(-FE+FN\right)⁢xTExN>\right) )\end{matrix}$

Le mélange par multiplication d'une sinusoïde réelle et d'une exponentielle complexe est un signal complexe, égal à la somme de deux exponentielles complexes, l'une à la fréquence somme et l'autre à la fréquence différence.

### Conséquences pour la position de la fréquence (F4) par rapport à la bande passante du signal d'entrée

La bande passante du signal d'entrée (SE) est comprise entre une fréquence minimum (FA) et une fréquence maximum (FB), et toutes les actions de translation de fréquence et les actions ultérieures concerneront des fréquences comprises entre ces deux fréquences.

Avec des signaux réels, le calcul précédent montre que la fréquence (F4) ne peut pas se situer à l'intérieur de la bande passante, car alors deux fréquences de la bande passante du signal pourront, par multiplication par une sinusoïde réelle, être translatés vers la fréquence (F4). Cet inconvénient ne se produira pas si (F4) est à l'extérieur de la bande passante du signal d'entrée(SE), par exemple à une fréquence supérieure aux fréquences de la bande passante du signal d'entrée (SE). On verra ci-dessous qu'une méthode simple pour placer la fréquence (F4) en dehors de la bande passante du signal d'entrée (SE) est de sur échantillonner d'un facteur 2 le signal d'entrée (SE).

Avec des signaux complexes, en revanche, il n'y a pas de fréquence image et la fréquence (F4) peut se situer à l'intérieur de la bande passante du signal d'entrée (SE).
Nota : La remarque précédente rejoint la remarque générale qu'un signal complexe (qui contient deux valeurs réelles par échantillon) contient dans le principe autant d'information qu'un signal réel échantillonné deux fois plus rapidement.

Dans la suite du document, sauf mention contraire, les opérations de translation de fréquence des signaux analysés sont réalisées par multiplication avec un signal réel.

### Possibilité de permuter l'action (TFE) de changement de fréquence et des actions de filtrage

On remarquera les éléments suivants :
a) les opérations de filtrage envisagées sont des opérations de filtrage linéaire à coefficients constants sur une période d'analyse ; ces opérations de filtrage sont donc des opérations linéaires et invariantes dans le temps (dans la littérature anglo-saxonne : LTI « linear and time invariant »)
b) une opération de translation de fréquence par une fréquence constante (multiplication par une exponentielle ou la somme de deux exponentielles complexes pour une multiplication par une sinusoïde) sont aussi des opérations linéaires et invariantes dans le temps

C'est un fait connu qu'il est possible de permuter deux ou plusieurs opérations qui sont linéaires et invariantes dans le temps. Il est donc possible dans le cadre de l'invention de permuter des opérations de filtrage et des opérations de changement de fréquence. On peut aussi remplacer une multiplication par une exponentielle complexe par une suite de deux multiplications par des exponentielles si le produit des deux exponentielles complexes est égal à l'exponentielle complexe initiale.

### 5) Un sur échantillonnage préalable

Pour pouvoir utiliser un changement de fréquence par un signal réel dans le cadre de l'invention, avec des signaux échantillonnés à une fréquence d'échantillonnage (FE), il s'avère avantageux de ne considérer que les signaux de fréquence inférieure à (F4), (F4) étant la fréquence égale au quart de la fréquence d'échantillonnage, et non pas les signaux de fréquence inférieure à (F2), (F2) étant la fréquence égale à la moitié. de la fréquence d'échantillonnage et qui est classiquement la fréquence maximum contenue dans le signal échantillonné. Ce contexte permettra en effet de supprimer dans le cadre de l'invention la possibilité d'avoir des fréquences image.

Une méthode simple et avantageuse pour n'avoir à considérer que des signaux de fréquence inférieure à (F4), est de sur échantillonner d'un facteur 2 le signal initial (SI) pour créer le signal d'entrée (SE). Une méthode alternative est de réaliser un filtrage sélectif en fréquence pour ne conserver que les fréquences inférieures à (F4) ou à une fréquence inférieure à (F4) dans le signal d'entrée.

Par exemple, pour un signal vocal de téléphonie classique (bande passante de 300 Hz à 3.400 Hz avec un signal échantillonné 8.000 fois par seconde), tout ou partie du spectre de fréquences pourra être ré échantillonné de manière classique 16.000 fois par seconde. Un tel ré échantillonnage, en effet, a pour effet que la fréquence de 4.000 Hz, qui était initialement la fréquence maximum possible pour le signal car égale à la moitié de la fréquence d'échantillonnage devient après le ré échantillonnage la fréquence (F4), égale au quart de la nouvelle fréquence d'échantillonnage. A la suite du doublement de 8.000 à 16.000 Hz de la fréquence d'échantillonnage, le changement de fréquence se fait vers le haut de la gamme de fréquences et que en conséquence une seule fréquence de la bande fréquence étudiée se trouvera amenée à la fréquence (F4)

### 6) Un exemple de signal translaté en fréquence

Dans le contexte ci-dessus, si la fréquence (FN) analysée est la fréquence (FI), la fréquence (FO) de l'oscillateur local (OL) pourra être (F4)-(FI).
Nota : Dans toutes les figures relatives aux signaux et aux paramètres extraits de ces signaux :
- l'axe horizontal représente le temps ; les signaux sont échantillonnés à 8.000 Hz, ce qui signifie que un intervalle de longueur 100 sur l'axe horizontal représente 100 fois 1/8.000ème de seconde, soit 12,5 milliseconde, et un intervalle de longueur 50 représente 6,25 millisecondes
- l'axe vertical représente une valeur, qui est soit une amplitude soit un angle exprimé en degrés

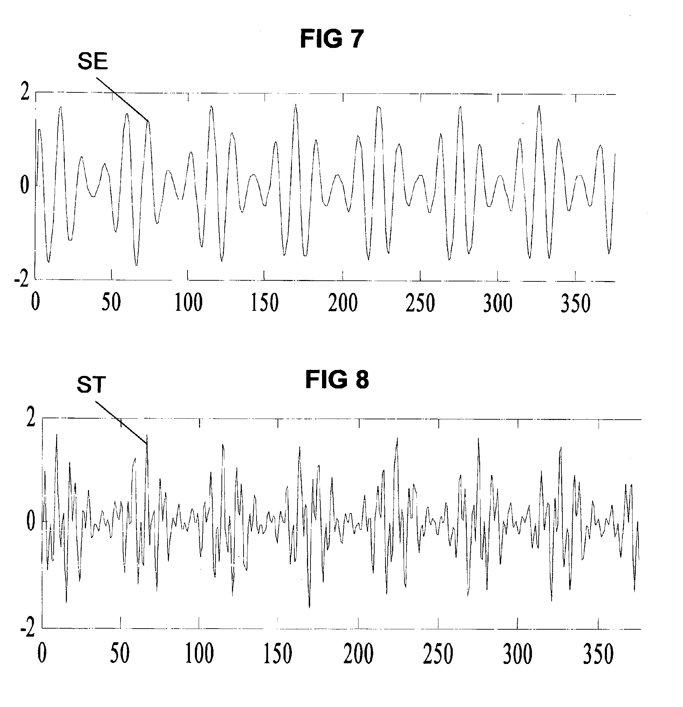

La Figure 7 présente la variation dans le domaine temporel un signal d'entrée (SE) modulé à la fois en fréquence et en amplitude, échantillonné à une fréquence de 8.000 Hz (50 unités sur l'axe horizontal représentent 6,25 millisecondes) :
a) la fréquence est centrée autour de 597 Hz et varie de manière continue et linéaire (« chirp » dans la littérature anglo saxonne) de environ (597 - 45) Hz à (597 + 45) Hz ; la phase initiale est fixée à -30 degrés
b) ce signal modulé en fréquence est aussi modulé en amplitude à un fréquence de 153 Hz avec un indice de modulation égal à 0,75

La Figure 8 présente le signal (SE) modulé à la fois en fréquence et en amplitude de la Figure 7 transformé en signal (ST) après translation en fréquence vers la fréquence (F4).

### 7) Actions préalables possibles (CFE) et (FIS)

Pour certaines fréquences du signal étudié, il peut en revanche être avantageux de sous échantillonner ou de ne pas sur échantillonner le signal. Par exemple, l'échantillonnage initial à 8.000 fois par seconde correspond à une fréquence (F4) de 2.000 Hz. Une opération de filtrage sélectif en fréquence sur un signal initial (SI) pour créer le signal d'entrée (SE) avant l'opération de mémorisation peut par exemple séparer le signal à étudier en deux bandes de fréquences, l'une allant de 0 Hz à une fréquence de coupure de 2.000 Hz ou un peu inférieure, l'autre allant de cette fréquence de coupure à la fréquence maximum du signal, soit 4.000 Hz

Cette action de filtrage fréquentiel préalable (FIS) sur un signal initial (SI) pour créer un signal d'entrée (SE) peut être répétée et certaines parties du spectre de fréquences peuvent être sous échantillonnées afin de réduire le nombre d'opérations de calcul nécessaires dans les phases ultérieures. Par exemple la partie du spectre allant de 0 à 500 Hz peut être étudiée avec une fréquence d'échantillonnage égale à 2.000 Hz, soit le quart de la fréquence d'échantillonnage initiale

Les actions possibles de sur ou sous échantillonnage d'un signal initial (SI) pour créer un signal d'entrée (SE) seront regroupées sous la dénomination de changement de fréquence d'échantillonnage (CFE). Il est possible de combiner plusieurs actions de changement de fréquence d'échantillonnage (CFE) et/ou de filtrage fréquentiel préalable (FIS) sur un signal initial (SI) pour créer le signal d'entrée (SE).

Ces actions de filtrage fréquentiel et de sur ou sous échantillonnage sont des actions classiques pour lesquelles il existe de nombreuses techniques efficaces en termes de nombre d'opérations de calcul utilisées. Par ailleurs, les gammes de fréquences du signal et les fréquences d'échantillonnage indiquées ci-dessus concernent un cas important, qui est celui du signal vocal transmis en téléphonie. Ce cas d'usage était donné à titre d'exemple, et des valeurs correspondantes dans d'autres cas, par exemple un signal audio haute fidélité échantillonné à 44,1 Khz s'en déduisent de manière classique. Dans tous les cas, les fréquences étudiées au cours des opérations ultérieures seront comprises dans la bande de fréquences utiles du signal étudié.

### 8) La gestion du multiplexage et de l'oscillateur local

Dans le fonctionnement de l'invention, qui est multiplexé dans le temps puisqu'il y a plusieurs fréquences à traiter en parallèle, l'oscillateur local (OL) doit fréquemment changer de fréquence et, lorsqu'il revient à nouveau sur une fréquence étudiée, il doit retrouver un contexte qui lui permette de générer des échantillons de signal qui soient la suite exacte des dernier échantillons générés pour cette même fréquence. Cet oscillateur local doit donc être agile (c'est-à-dire capable de varier rapidement) à la fois en phase et en fréquence.

La réalisation d'un tel oscillateur local agile est réalisable en technique numérique avec des moyens économiques en utilisant la technique de la synthèse numérique directe (« DDS » qui signifie « Direct Digital Synthesis » dans la littérature anglo saxonne), qui nécessite principalement des opérations d'addition et de lecture de valeurs dans une table, et aucune multiplication.

La gestion du contexte, c'est-à-dire des valeurs des variables de travail de l'oscillateur local (OL) et des autres éléments qui procèdent à des calculs spécifiques pour chaque fréquence (FN) analysée, peut être réalisée de manière classique en mémorisant ou en gardant en mémoire ces valeurs de travail à chaque changement de fréquence analysée, et en s'y référant à nouveau lorsque la fréquence (FN) est à nouveau analysée.

### 9) L'action de filtrage sélectif en fréquence (FSE)

Pour chacune des fréquences (FN) analysées, la séquence (ST) d'échantillons translatés en fréquence autour de la fréquence (F4) produite par l'action (TFE) de changement de fréquence fait ensuite l'objet d'une action de filtrage sélectif en fréquence (FSE) appliquée à la séquence (ST), pour éliminer les fréquences éloignées de la fréquence (F4), produisant une séquence d'échantillons filtrés (SF), de même longueur.

L'action de filtrage sélectif en fréquence (FSE) a pour but de ne garder, pour chaque séquence (ST) d'échantillons translatés en fréquence autour de la fréquence (F4) (il y a une telle séquence par fréquence (FN) analysée), que les fréquences voisines de la fréquence (F4), dans une bande passante (BF), et cette bande passante (BF) peut dépendre de le fréquence (FN) analysée.

En effet, une analyse de l'amplitude et de la fréquence instantanées d'un signal ne peut être pertinente que si elle porte sur une seule composante fréquentielle , et l'action de filtrage sélectif en fréquence (FSE) a pour but d'assurer au maximum que la pluralité (NF) de signaux filtrés (SF) respectent cette condition. Les bandes passantes (BF) sont adaptées pour que chaque bande passante (BF) contienne essentiellement une seule composante fréquentielle du signal d'entrée (SE).

Il existe de nombreuses études définissant de telles bandes de fréquence pour un signal vocal. Pour un signal vocal de téléphonie, on peut considérer en première approche que ces bandes de fréquence sont de environ plus ou moins 50 ou 100 Hertz pour chaque fréquence (FN) étudiée, la bande de fréquence pertinente allant en s'élargissant lorsque la fréquence étudiée augmente. D'autres bandes de fréquences, d'une largeur par exemple allant de plus ou moins 5 Hz à plus ou moins 200 Hz peuvent être envisagées si le spectre de fréquences étudiées est élargi vers le bas et vers le haut. Une bande passante de 100 ou 200 Hz (plus ou moins 50 ou 100 Hz) ramenée à une fréquence d'échantillonnage de 8.000 ou 16.000 Hz ne pose pas de problème de principe pour sa réalisation, quelle que soit la définition de cette bande passante (à - 3 dB ou -6dB par exemple).

### 10) Un exemple de filtre sélectif avantageux

### Les contraintes pour le choix d'un filtre pour l'invention

Les contraintes pour le choix du filtre sont de natures diverses :
a) meilleure précision possible, avec une réalisation en virgule fixe
b) délai prévisible en fonction de la fréquence (pour une séquence donnée d'échantillons en sortie du filtre sélectif, on veut pouvoir connaître avec le plus de précision possible quelle est la séquence du signal d'entrée qui correspond à cette séquence en sortie)
c) possibilité de choisir la bande passante du filtre

### Un type de filtre avantageux

De manière avantageuse, il existe un type de filtre qui présente les caractéristiques suivantes dans le contexte d'un filtrage autour de la fréquence (F4) :
a) Calculs 100 % exacts
b) Filtre linéaire en phase, c'est-à-dire présentant un délai de groupe (c'est-à-dire le délai de réponse du filtre en fonction de la fréquence) constant
c) Possibilité de choisir la bande passante souhaitée

Un tel filtre est un filtre (FEF) dit à « échantillonnage de fréquence » (frequency sampling filter » dans la littérature anglo saxonne ; la Référence 1 décrit en détail ce type de filtre), et il est constitué de 2 éléments en cascade :
1) Un filtre « en peigne » (« comb filter dans la littérature anglo saxonne), constitué d'un sommateur et d'une ligne à retard ; ce filtre ne contient que des zéros et pas de pôle
2) Un filtre avec un pôle (ou deux pôles conjugués) situés sur le cercle unité du plan complexe (avec un seul pôle, le filtre est à coefficients complexes, avec deux pôles conjugués, il est à coefficients réels)

Le point important dans ce type de filtre est que le ou les zéros doivent compenser exactement les pôles, et l'exactitude de cette compensation est un point très important pour le bon fonctionnement du filtre.

### Application à l'invention de ce type de filtre

Dans le cadre de l'invention :
a) la fréquence centrale du filtre est la fréquence (F4), ce qui fait que le pôle ou les pôles est situé ou sont situés sur l'axe des Y (en plus d'être situés sur le cercle unité) ; les coordonnées de ces pôles sont donc (0,+1) et (0,-1) (+i et -i en notation complexe).
b) En conséquence, la compensation des zéros et des pôles peut être exacte et le calcul de la réponse du filtre avec le ou les pôles ne fait appels qu'à des additions et des soustractions, ce qui signifie que les calculs peuvent être exacts.
c) La longueur de la ligne à retard détermine la bande passante du filtre : plus cette longueur est grande, plus la bande passante est étroite
d) Pour obtenir des filtres plus sélectifs, il est possible de placer en cascade plusieurs filtres du type précédent

L'utilisation d'autres types de filtres reste toutefois possible.

### Un exemple de ce type de filtre

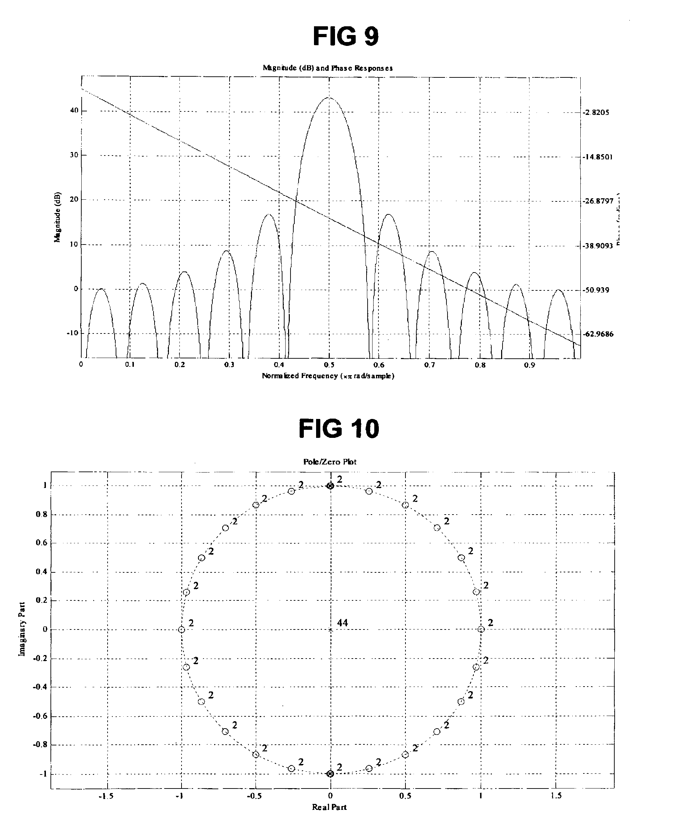

La Figure 9 montre la réponse en fréquence (amplitude et phase) d'un tel filtre, et Figure 10 montre les pôles et les zéros d'un tel filtre.

On remarquera sur la Figure 9 la réponse linéaire en phase, qui implique un délai de groupe (délai de réponse du filtre en fonction de la fréquence du signal), qui est égal à 22 échantillons.

On remarquera sur la Figure 10 :
- les nombreux zéros sur le cercle unité (indiqués par des o) dus au filtre en peigne de longueur 24
- les 2 pôles en (0,+1) et (0,-1) (indiqués par des x)
- la superposition exacte des pôles avec des zéros correspondants
- le chiffre 2 indiqué en regard de chaque pôle ou zéro, ce qui indique qu'il s'agit d'un filtre d'ordre 2

### Analyse de la réponse impulsionnelle du filtre utilisé

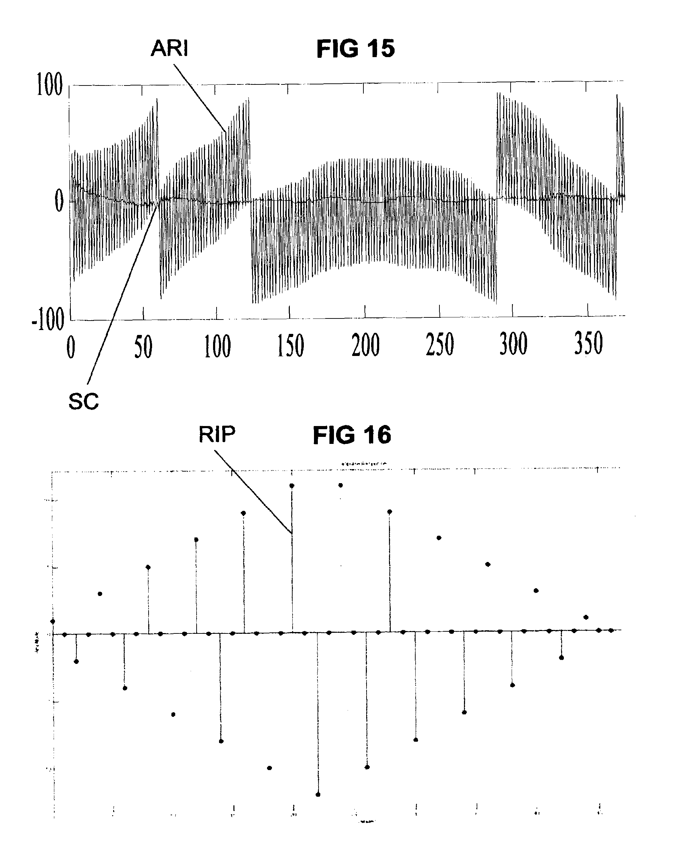

La Figure 16 montre la réponse impulsionnelle de ce filtre, qui peut être analysée (à un décalage temporel près d'un échantillon) comme le produit des deux signaux temporels suivants :
i) une enveloppe dont la forme est celle d'un triangle isocèle
ii) la séquence numérique particulière suivante : 1,0,-1,0,1,0,-1,0,1,0,-1,... qui correspond à l'échantillonnage d'une sinusoïde de fréquence F4 (voir section 13.1.2 « Frequency translation by -fs/4 » de la Référence 1

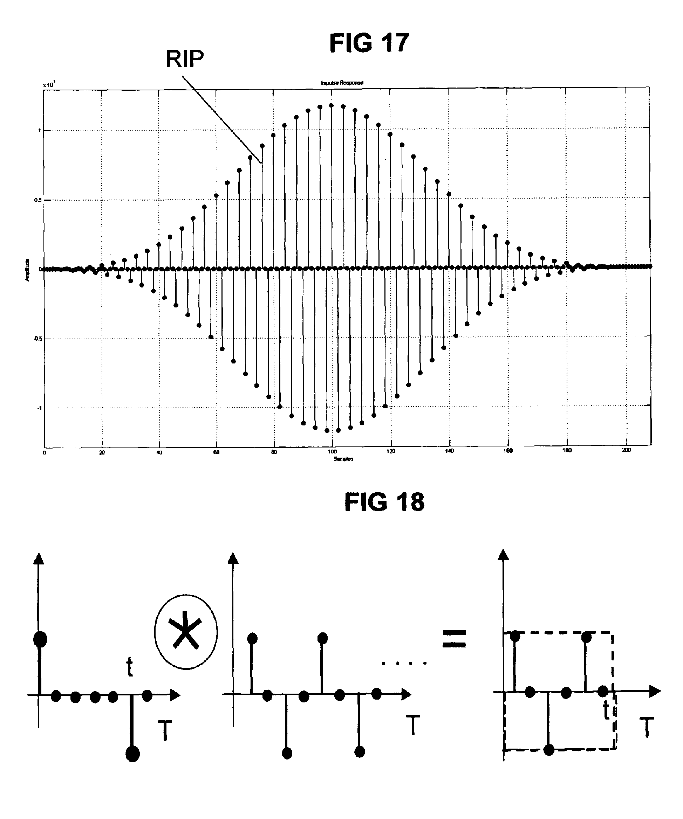

La Figure 17 montre la réponse impulsionnelle d'un autre filtre utilisable dans le cadre de l'invention. On constate que, comme sur la Figure 16, l'existence d'une succession de valeurs positives, nulle, négative, nulle,..., avec toutefois une enveloppe de forme différente

### L'architecture du filtre utilisé et la formation de la réponse impulsionnelle

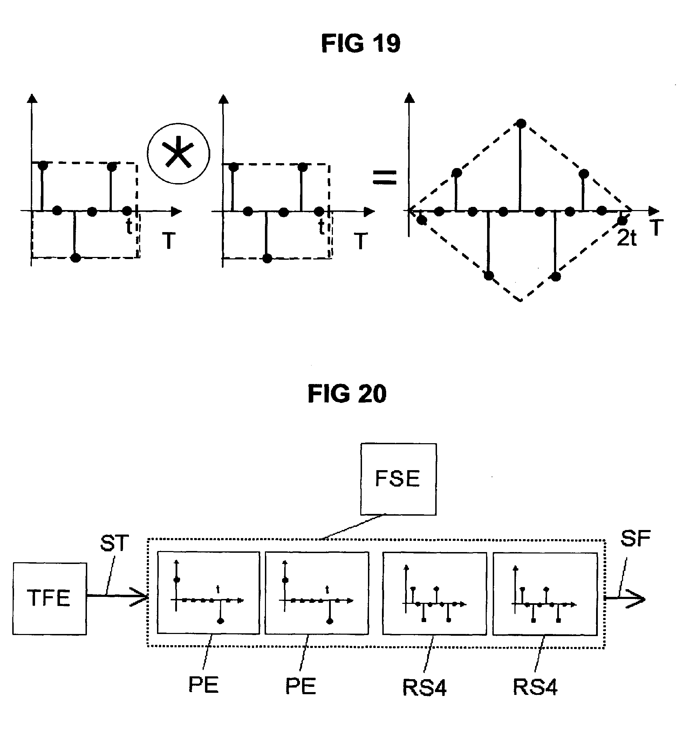

La Figure 20 décrit l'architecture de ce filtre utilisé pour réaliser l'étape de filtrage sélectif en fréquence (FSE), sous la forme de quatre éléments en cascade :
i) Une succession de deux filtres en peigne (PE)
ii) Une succession de deux résonateurs (RS4) accordés sur la fréquence (F4)

On remarquera que dans cette architecture les filtres en peigne (PE) et les résonateurs (RS4) agissent sur la pluralité (NF) des signaux translatés.

Les Figures 18 et 19 décrivent de manière symbolique la formation de la réponse impulsionnelle constatée en Figure 16 à partir des réponses impulsionnelles des filtres en peigne (PS) et des résonateurs :
i) Le signe * indique qu'il s'agit d'un produit de convolution (dans le domaine temporel) entre deux réponses impulsionnelles, ce qui traduit le fait que ces réponses impulsionnelles correspondent à des éléments mis en série
ii) La Figure 18 (voir Figures 7-4-a et 7-7-a de la Référence 1) indique que le produit de convolution de la réponse impulsionnelle d'un filtre en peigne (PE), composée de deux impulsions de signe opposé et séparées par un délai qui est l'ordre du filtre en peigne (PE), et de la séquence infinie 1,0,-1,0,1,0,-1,0,1,0,-1,... qui est la réponse impulsionnelle du résonateur (RS4) donne une séquence finie 1,0,-1,0,1,0,-1,0,1,0,-1,..., qui est la réponse impulsionnelle d'un filtre (FEF) dit à « échantillonnage de fréquence » composé d'un filtre en peigne (PE) et d'un résonateur (RS4) accordé sur la fréquence (F4)
iii) La Figure 19 (voir Figure 5-45 de la Référence 1) indique que la mise en série de deux tels filtres donne une réponse impulsionnelle qui est le produit d'un triangle isocèle de largeur finie et d'une séquence infinie 1,0,-1,0,1,0,-1,0,1,0,-1,...

La Figure 17 montre la réponse impulsionnelle d'un autre filtre réalisable avec la même architecture, avec une séquence de 4 filtres en peigne (PE) et une séquence de quatre résonateurs (RS4). On remarque sur cette figure que :
- l'amplitude de la réponse au voisinage du début et de la fin de la réponse impulsionnelle est très voisine de zéro
- l'enveloppe de la réponse impulsionnelle a une forme très voisine de celle d'une gaussienne (c'est un fait connu que la convolution de 4 rectangles donne une forme voisine de celle d'une gaussienne)

### La possibilité d'autres architectures pour ce type de filtre

Dans la description précédente, on remarquera que à la fois le filtre en peigne (PE) et un résonateur (RS4) sont des systèmes linéaires et invariants dans le temps, et qu'ils peuvent donc être permutés, c'est-à-dire disposés dans une séquence a priori quelconque. Alternativement, on peut aussi remarquer que le produit de convolution est associatif et commutatif, ce qui amène à la même conclusion.

### 10bis) Des architectures possibles et avantageuses pour la réalisation de l'action de filtrage sélectif en fréquence (FSE) Trois autres architectures pour ce type de filtre

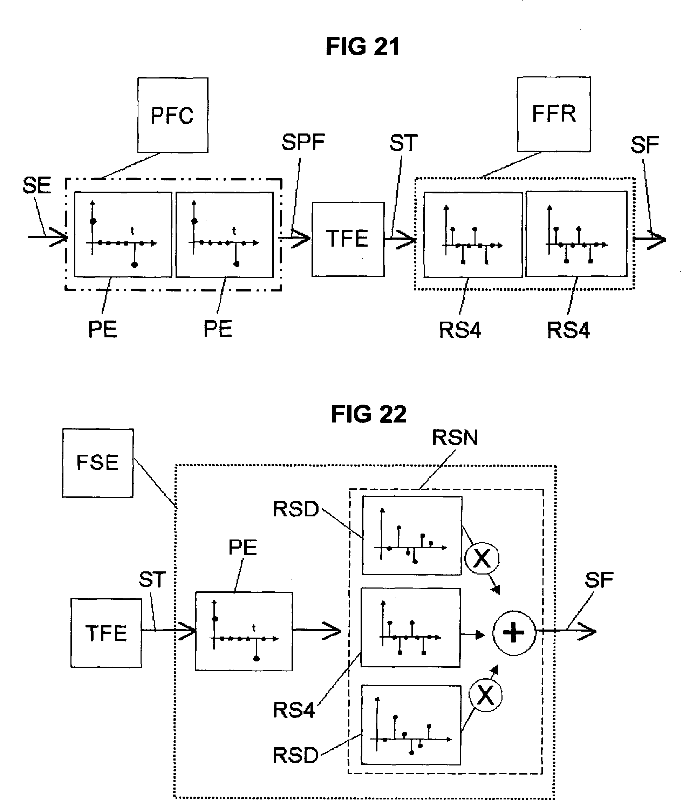

D'autres architectures sont possibles et avantageuses pour la réalisation de l'action de filtrage sélectif en fréquence (FSE). Les Figures 21, 22 et 23 montrent des architectures dans lesquelles :
- Figure 21 : un seul filtre en peigne (PE) ou une seule succession (NP) de filtres en peigne (PE) est mis en commun entre la pluralité (NF) d'opérations de filtrage sélectif en fréquence (FSE)
- Figure 22 : une fenêtre temporelle non rectangulaire est obtenue en utilisant plusieurs résonateurs de fréquences différentes fonctionnant en parallèle et dont les résultats sont multipliés par des coefficients fixes et sommés

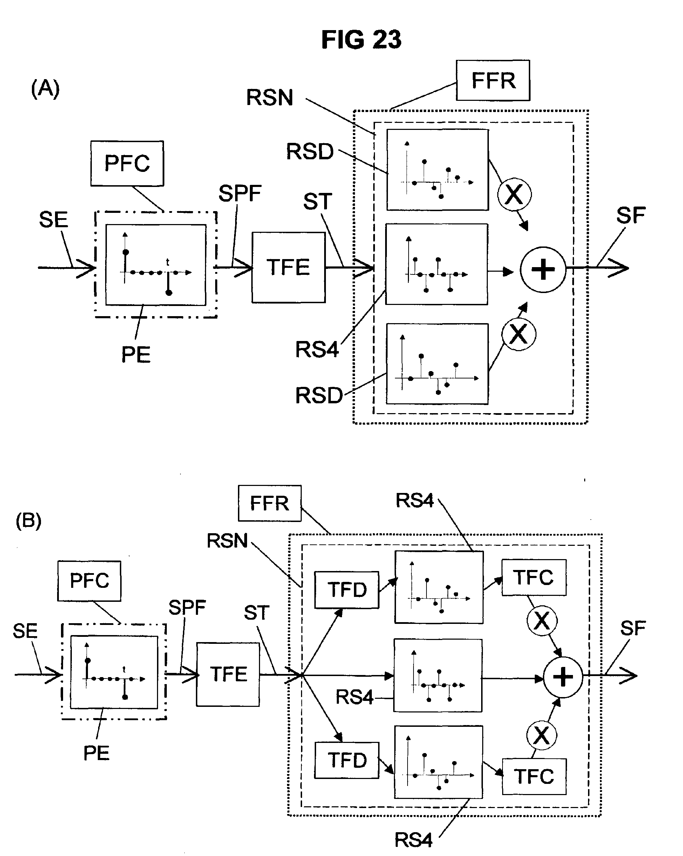

- Figure 23 : un filtre en peigne (PE) est mis en commun entre la pluralité (NF) d'opérations de filtrage sélectif en fréquence (FSE) et une fenêtre temporelle non rectangulaire est obtenue en utilisant plusieurs résonateurs de fréquences différentes en parallèle (combinaison des architectures des Figures 21 et 22)

### Première autre architecture pour ce type de filtre

L'architecture de la Figure 21 pour réaliser l'étape de filtrage sélectif en fréquence (FSE), est la suivante :
i) Une succession de deux filtres en peigne (PE) agissant sur le signal d'entrée (SE) dans le cadre d'une opération de pré-filtrage (PFC)
ii) Une succession de deux résonateurs (RS4) accordés sur la fréquence (F4) et agissant sur la pluralité (NF) des signaux (ST) translatés en fréquence
iii) Une pluralité (NF) d'opérations de translation de fréquence (TFE) située entre les étapes précédentes, transformant le signal d'entrée (SE) pré-filtré dans l'opération (PFC) de pré-filtrage en la pluralité (NF) des signaux (ST) translatés en fréquence

Il est en effet avantageux en termes d'utilisations de ressources de pouvoir mettre le filtre en peigne (PE) en commun pour la pluralité des signaux filtrés (ST).

On constate à la fois par l'analyse et par l'expérimentation que cette mise en commun est possible dans le cadre de l'architecture décrite dans la Figure 21 à condition de respecter la structure des filtres sélectifs en fréquence (FSF) (nombre de filtres en peigne (PE) en série égal au nombre de résonateurs (RS4) mis en série) et de faire correspondre par l'opération de translation de fréquence (TFE) un zéro du filtre en peigne (PE) et la fréquence (F4) du résonateur. Les conditions suivantes doivent donc être respectées :
i) Pour chacune des fréquences (FN) analysées, le nombre (NP) de filtres en peigne d'une succession de (NP) filtres en peigne (PE) est égal au nombre (NR) de résonateurs d'une succession de (NR) résonateurs (RS) accordés sur la fréquence (F4)
ii) les zéros en fréquence du filtre en peigne (PE) incluent chacune des fréquences (FN) analysées de la pluralité (NF) des fréquences
iii) Chaque opération de translation de fréquence (TFE), correspondant chacune à une des fréquences (FN) analysées de la pluralité (NF) des fréquences, est adaptée à changer les zéros en fréquence du filtre en peigne (PE) en la fréquence (F4) des résonateurs (RS4)

### Deuxième autre architecture pour ce type de filtre

L'architecture de la Figure 22 pour réaliser l'étape de filtrage sélectif en fréquence (FSE), est la suivante :
i) Un filtre en peigne (PE) agissant sur un des signaux (ST) translatés en fréquence
ii) Une pluralité (RSN) de résonateurs en parallèle ((RS4), (RSD)) accordés sur la fréquence (F4) pour le résonateur (RS4) et sur des fréquences (FD) voisines pour les résonateurs (RSD), dont les signaux en sortie sont multipliés par des coefficients fixes et sommés pour fournir en sortie un signal filtré (SF)

L'intérêt de cette structure est de pouvoir améliorer la réjection des fréquences avoisinantes, tout en gardant un filtre en peigne dont la fenêtre temporelle est aussi courte que possible ; cette amélioration des performances est réalisée au prix de l'introduction de multiplications additionnelles.

Le calcul des filtres selon cette architecture se fait selon les principes de calcul des filtres sélectifs en fréquence (FSF) en général, et selon la section 7.1.9 de la Référence 1 (« Improving performance with transition bands coefficients »).

Un autre intérêt de cette structure est de pouvoir réaliser par des moyens purement fréquentiels des fenêtres temporelles appliquées aux signaux traités, ainsi que décrit, par exemple, dans la section 13.3 de la Référence 1 (« Frequency domain windowing »).

### Troisième autre architecture pour ce type de filtre

L'architecture de la partie (A) de la Figure 23 pour réaliser l'étape de filtrage sélectif en fréquence (FSE) reprend l'architecture de la Figure 22, en introduisant en outre la mise en commun du filtre en peigne (PE) décrite dans l'architecture correspondant à la Figure 21 ; elle est la suivante:
i) Un filtre en peigne (PE) agissant sur le signal d'entrée (SE) et fournissant en sortie un signal (SPF)
ii) Une pluralité opération de translation de fréquence (TFE), adaptée à fournir une pluralité de signaux translatés en fréquence (ST)
iii) Pour chaque signal translaté en fréquence (ST), une pluralité (RSN) de résonateurs en parallèle ((RS4), (RSD)) accordés sur la fréquence (F4) pour le résonateur (RS4) et sur des fréquences (FD) voisines pour les résonateurs (RSD), dont les signaux en sortie sont multipliés par des coefficients fixes et sommés pour fournir en sortie un signal filtré (SF)

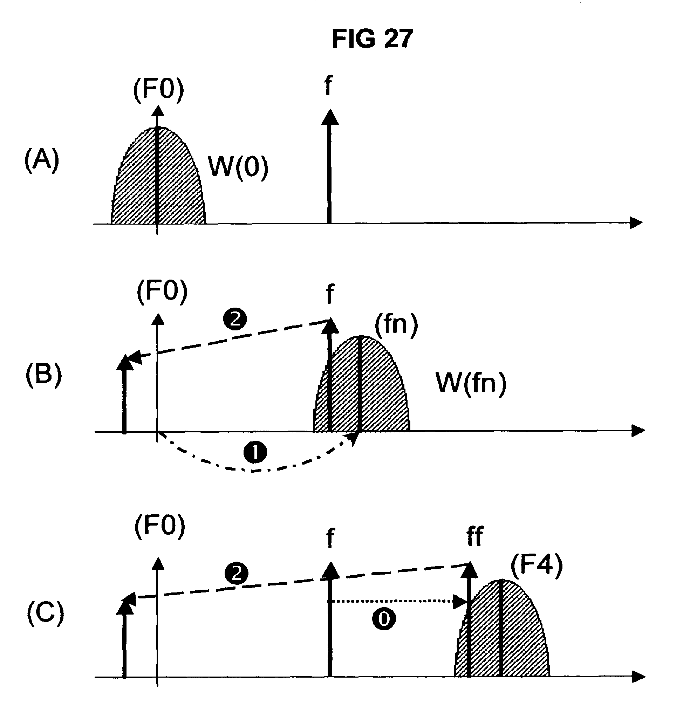

En signaux complexes, et par analogie avec la Figure 27, et notamment la partie (C), on peut remarquer qu'il est possible de remplacer un résonateur (RSD), accordé sur une fréquence (FD), par un résonateur (RS4) précédé d'une opération de translation de fréquence (TFD), adaptée pour translater la fréquence (F4) à la fréquence (FD) de chaque résonateur (RSD) remplacé et suivi d'une opération de translation de fréquence (TFC), adaptée pour translater la fréquence (FD) à la fréquence (F4), ou éventuellement vers la fréquence zéro pour réaliser une Transformée de Fourier Glissante (TFG) ; l'architecture correspondante est représentée en partie (B) de la Fifure 23 et est la suivante :
i) et ii) : identiques
iii) Pour chaque signal translaté en fréquence (ST), la pluralité (RSN) de résonateurs en parallèle ((RS4), (RSD)) est remplacée par :
   - un résonateur (RS4) identique à celui de la partie (A)
   - chaque résonateur (RSD) accordé sur une fréquence (FD) voisine de (F4) mentionné dans la partie (A) est remplacé par un résonateur (RS4) précédé d'une opération de translation de fréquence (TFD), adaptée pour translater la fréquence (F4) à la fréquence (FD) de chaque résonateur (RSD) remplacé et suivi d'une opération de translation de fréquence (TFC), adaptée pour translater la fréquence (FD) à la fréquence (F4), ou éventuellement vers la fréquence zéro

On peut remarquer que lorsque plusieurs pluralité (RSN) de résonateurs en parallèle sont adaptés à agir sur plusieurs signaux translatés en fréquence (ST) correspondant à des fréquences (FN) voisines, des simplifications par rapport à l'architecture décrite dans la partie 5B) de la Figure 23 peuvent se produire, car alors certaines translations de fréquence (TFD) peuvent s'avérer redondantes.

### 11) Un exemple de signal translaté en fréquence et filtré

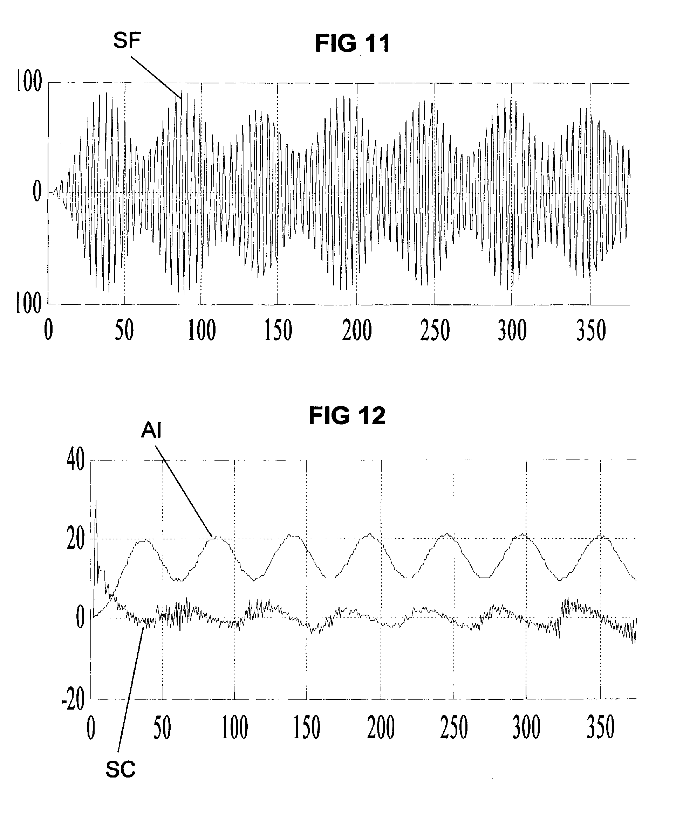

La Figure 11 présente le signal filtré (SF) obtenu à partir du signal translaté en fréquence (ST) de la Figure 8 après passage dans le filtre décrit dans les Figures 9 et 10.

On remarquera que l'amplitude du signal filtré (SF) est supérieure d'un facteur de 60 environ à l'amplitude du signal (ST) translaté en fréquence, en raison du gain en amplitude apporté par le filtre à la fréquence considérée.

On remarquera aussi une période d'amorçage du filtre (qui est initialisé à zéro). Cette période d'amorçage est proche du délai de groupe de 22 échantillons du filtre utilisé.

Le signal (SF) de la Figure 11 fait apparaître la modulation d'amplitude du signal étudié ; en revanche les informations de fréquences n'apparaissent pas directement.

### 12) L'extraction des paramètres (EXP)

On se place dans le contexte de l'utilisation pour l'étape de filtrage sélectif en fréquence (FSE) du filtre décrit dans les Figures 9 et 10, ou d'un filtre avec des propriétés voisines. En particulier, il s'agit de filtres à coefficients réels. Des adaptations sont possibles en cas d'utilisation de filtres à coefficients complexes possédant des propriétés comparables.

L'extraction (EXP) des paramètres (PA) du signal filtré (SF) repose sur une propriété importante de la fréquence (F4), égale au quart de la fréquence d'échantillonnage (FE) : les échantillons successifs du signal (SF) sont décalés de 90°, puisqu'il en existe 4 par période de la fréquence (F4).

L'idée centrale de l'extraction (EXP) des paramètres (PA) du signal filtré (SF) consiste à tirer parti de ce décalage de 90° entre signaux successifs, et de traiter le signal (SF) comme un signal analytique. Dans cette optique, ce ne seront pas les échantillons individuels du signal filtré (SF) qui seront étudiés, mais des paires d'échantillons successifs.

Cette approche est paradoxale, puisqu'elle signifie que un signal réel, obtenu à partir d'un signal d'entrée (SE) réel, après des opérations classiques de traitement du signal réalisées uniquement avec des calculs avec des coefficients réels, est traité comme un signal complexe. Cette approche est possible à la suite notamment de la translation de fréquence (TFE) vers la fréquence (F4).

Pour chaque couple de valeurs successives d'échantillons du signal filtré (SF)(k) et (SF)(k-1), identifiés par un indice k, on procède au calcul suivant, qui est une conversion classique d'un nombre complexe exprimé en coordonnées cartésiennes en un nombre complexe exprimé sous forme de module et d'argument :
a) Amplitude instantanée (AI) = Module(k) = Racine((SF)(k)*(SF)(k)+(SF)(k-1)*(SF)(k-1))
b) Argument instantané (ARI) = Argument(k) = ArcTangente((SF)(k)/(SF)(k-1))
C'est-à-dire pour un couple de deux valeurs successives :
a) Racine carrée de la somme des carrés
b) Arc tangente du quotient
   Par ailleurs, pour vérifier que le décalage entre deux échantillons successifs est bien de 90°, il est avantageux de réaliser le calcul suivant qui permet le calcul d'un signal de contrôle (SC), à partir d'une différence :
c) Différence(D) = (Arc tangente du quotient pour k et k-1) - (Arc tangente du quotient pour k-1 et k-2)
   Le résultat du calcul c) devrait être égal à 90° ou -90°. Dans la pratique on calculera le signal de contrôle (SC) à partir de la différence (D) de la manière suivante :
d) SC(k) = Valeur absolue de la différence (D -90°)

La Figure 12 présente le résultat du calcul a) et d) ci-dessus appliqué au signal filtré (SF) de la Figure 11 :
1) La sinusoïde régulière située entre les amplitudes 10 et 20 représente l'amplitude instantanée (le Module) du signal filtré (SF) (ce signal est obtenu en neutralisant le gain du filtre et en multipliant l'amplitude par 20 pour des raisons de lisibilité du diagramme)
2) le signal centré sur 0 est exprimé en degrés et représente le signal de contrôle (SC) ; on remarque une période d'amorçage pour que le signal soit centré autour de zéro, qui correspond à la période d'amorçage du filtre ; les 2 premières valeurs de ce signal sont forcées à 0 pour des raisons de lisibilité du diagramme)

On constate que, en régime permanent, la valeur du signal de contrôle (SC) est quasiment toujours inférieure à 5° en valeur absolue, et que ces 5° sont une valeur de crête rarement atteinte.

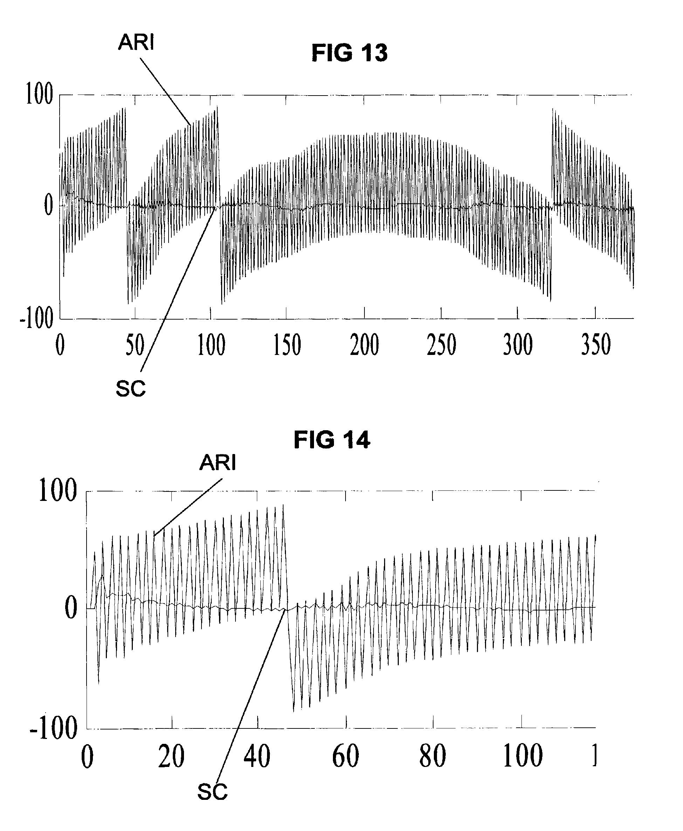

La Figure 13 présente le résultat du calcul b) et d) ci-dessus appliqué au signal filtré (SF) de la Figure 11 :
1) La courbe qui oscille rapidement est exprimée en degrés et représente la phase instantanée (l'Argument) du signal filtré (SF)
2) le signal centré sur 0 est le même que le signal 2) de la Figure 12

La Figure 14 est un zoom sur un signal analogue à ceux de la Figure 13, et a pour objet de montrer la structure fine de la courbe 1) de la Figure 13, structure qui n'apparaît pas lorsque de nombreux points de la courbe sont très proches l'un de l'autre.

La Figure 15 est l'analogue de la Figure 13, obtenue avec les mêmes opérations, et avec un signal d'entrée (SE) identique à celui de la Figure 7 (le signal utilisé pour la Figure 13), à une seule différence près : la phase initiale au lieu d'être de -30° est de 0° dans la Figure 15.

On remarque que les courbes 1) des Figures 13 et 15 sont bien décalées de 30°. Ces courbes 1) des Figures 13 et 15 représentent donc bien la phase instantanée du signal filtré (SF). Concernant ces courbes on remarquera aussi que :
- la différence entre deux valeurs successives est en régime permanent très proche de 90°
- cette phase instantanée croît lentement entre deux échantillons pairs ou impairs successifs (les échantillons pairs correspondent à l'extrémité du haut de la courbe et les échantillons impairs correspondent à l'extrémité du bas de la courbe, ou vice-versa)
- cette différence de phase entre échantillons pairs ou impairs successifs permet de calculer la fréquence instantanée du signal

En effet si la phase instantanée (PI) de l'échantillon N1 est A1 et si la phase instantanée (PI) de l'échantillon N2 est A2, la fréquence instantanée (FI) est donnée en degrés, au signe près, par la formule : $\left(FI\right) = \left(\left(A⁢2-A⁢1\right)/\left(N⁢2-N⁢1\right)\right) X \left(\left(FE\right)/360\right)$
(FE) étant la fréquence d'échantillonnage du signal filtré (SF), et on suppose sans perte de généralité que :
a) N1 et N2 tous les deux pairs ou impairs et voisins
b) il n'y a pas de discontinuité de 90° ou multiples de 90° de la phase instantanée (PI) entre A1 et A2

Cette formule permet en particulier de suivre l'évolution de la fréquence instantanée (FI) des signaux des Figures 13 et 15. On remarquera en outre que :
a) la fréquence instantanée (FI), l'amplitude instantanée (AI), et la phase instantanée (PI) peuvent être évalués en régime permanent pour chaque nouvel échantillon du signal d'entrée (SE), soit typiquement de l'ordre de plusieurs milliers de fois par seconde pour les types de signaux étudiés
b) il est très facile de compenser les discontinuités de la phase instantanée (PI) car ses variations sont très faibles par rapport à l'ampleur des discontinuités de phase (90° ou 180°)

En pratique, avantageusement, on évaluera la fréquence instantanée (FI), l'amplitude instantanée (AI), et la phase instantanée (PI) uniquement lorsque le signal de contrôle (SC) a une valeur proche de zéro, ce qui permet de s'assurer notamment du fait que le fonctionnement est en régime permanent, et non pas dans un régime transitoire, qui est en général peu ou mal connu.

On remarquera enfin que la fréquence instantanée (FI), l'amplitude instantanée (AI), et la phase instantanée (PI) du signal filtré (SF) d'une part et du signal d'entrée (SE) d'autre part sont liées de manière simple :
a) La fréquence instantanée (FI) d'une fréquence (FN) du signal d'entrée (SE) est égale à celle du signal filtré (SF) correspondant, qui peut être positive ou négative, augmentée de l'écart entre la fréquence (FN) analysée d'une part et la fréquence (F4) d'autre part
b) L'amplitude instantanée (AI) d'une fréquence (FN) du signal d'entrée (SE) est égale à celle du signal filtré (SF) correspondant, multipliée par le gain du filtre à la fréquence instantanée (FI) du signal filtré (SF) (ce gain est connu à l'avance)
c) La phase instantanée (PI) d'une fréquence (FN) du signal d'entrée (SE) est égale à celle du signal filtré (SF) correspondant, à une constante près

### 13) Les paramètres qu'il est possible d'extraire

Les éléments précédents montraient comment l'étape (EXP) d'extraction des paramètres (PA) du signal permettait de :
1) Extraire les paramètres (PA) suivants pour le signal filtré : fréquence instantanée (FI), amplitude instantanée (AI), phase instantanée (PI)
2) Relier ces mêmes paramètres (PA) à ceux d'une fréquence (FN) du signal d'entrée (SE) analysée

En choisissant des fréquences (FN) analysées adaptées, par exemple régulièrement espacées, il est possible à partir des paramètres (PA) précédents de calculer, en utilisant en particulier des logarithmes, toutes les informations nécessaires pour calculer un cepstre réel (CR) ou un cepstre complexe (CC).

La Référence 4 montre les possibilités et la pertinence d'utiliser la notion d'amplitude et de fréquences instantanées pour décrire le signal de parole.

Il est aussi possible d'extraire (voir ci-après) une Transformée de Fourier Glissante (TFG) comme paramètre.

### 14) Le lien avec la Transformée de Fourier Glissante

Dans la suite du document, sauf mention contraire, les signaux et les opérations de translation sont des signaux et des opérations complexes.

La Référence 2 décrit les aspects techniques ainsi que des exemples d'application de la Transformée de Fourier Glissante (appelée Short Time Fourier Transform ou STFT dans cette référence), appelée Transformée de Fourier Glissante (TFG) dans le présent document.

### Analyse de la TFG vue comme une opération de filtrage

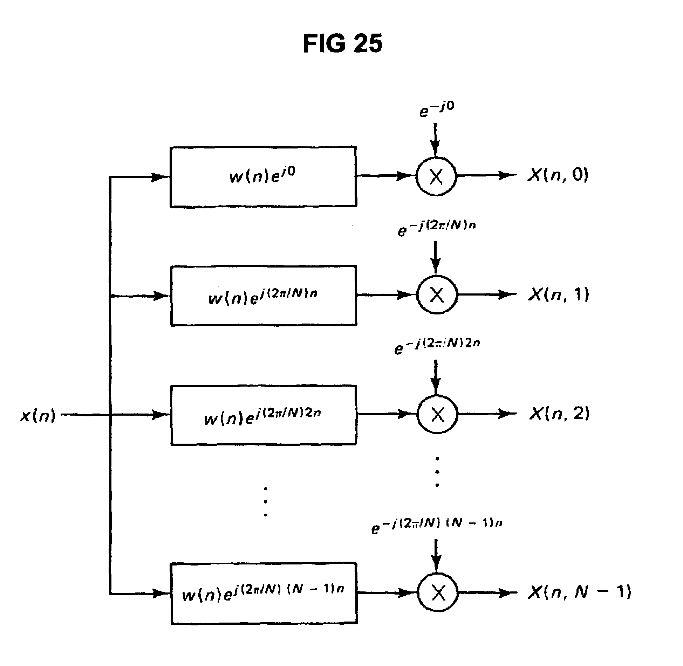

La Figure 25, qui reprend la Figure 6.8 de la Référence 2, décrit la TFG d'un signal réel échantillonné x(n) comme le résultat de l'action d'un banc de filtre en parallèle, chaque branche du filtre étant composée des éléments suivants :
a) un filtre dont la réponse impulsionnelle est donnée et dépend de la fréquence centrale (fn) de chaque branche du filtre (supposée positive)
b) la multiplication du signal en sortie du filtre par une exponentielle complexe dont la fréquence est le négatif (-fn) de la fréquence de la branche du filtre

La Figure 24 détaille le fonctionnement de chaque branche du filtre de la Figure 25. Dans la Figure 25 :
- w(n) est la fenêtre temporelle (supposée finie dans le temps et à coefficients réels) de la TFG
- exp←i x 2 x PI x (n/N)> est une exponentielle complexe de fréquence normalisée (fn), n pouvant varier de 0 à N-1, ce qui correspond à une fréquence en Hertz de 0 à ((N-1)/N) x ((FE)/2), (FE) étant la fréquence d'échantillonnage du signal.

La Figure 27 (parties (A) et (B)) explicite dans le domaine fréquentiel le fonctionnement de chaque branche du filtre de la Figure 25 :
a) La fenêtre temporelle w(n) correspond par transformée de Fourier à une fenêtre dans le domaine fréquentiel W(f), typiquement centrée sur la fréquence zéro, et donc dénommée (W(0) dans la partie (A)
b) Le signal à analyser peut être décomposé comme une somme d'exponentielles complexes ; on suppose que l'une d'elles possède une fréquence (f), voisine d'une fréquence centrale (fn) d'une des branches du filtre
c) La réponse impulsionnelle du filtre en entrée de chaque branche du filtre de la Figure 25 est le produit dans le domaine temporel w(n) x exp<-i x 2 x PI x (n/N)>
d) dans le domaine fréquentiel cela correspond à la convolution entre la réponse fréquentielle W(0) correspondant à w(n) et la fréquence de l'exponentielle complexe
e) on sait que cela correspond à une translation en fréquence vers la fréquence (fn) de la réponse fréquentielle W(0), pour donner W(fn), qui est la réponse fréquentielle W(0), décalée à la fréquence (fn) (opération (1) de la partie (B))
f) Le signal à analyser de fréquence (f) est modifié en amplitude et en phase, mais pas en fréquence, par la réponse fréquentielle W(fn)
g) Ce signal modifié par la réponse fréquentielle W(fn) est alors translaté vers la fréquence zéro par multiplication par l'exponentielle complexe de fréquence (-fn) (opération (2) de la partie (B)).

### Analyse de l'invention vue comme une opération de filtrage analogue à la TFG (signaux complexes)

Une analyse similaire à la précédente peut être effectuée pour l'invention (partie (C) de la Figure 27, qui utilise les mêmes notations) :
a) L'exponentielle complexe de fréquence (f) est translatée (opération (0) de la partie (C), correspondant à (la translation de fréquence (TFE) suivie de l'opération (FSE) de filtrage sélectif en fréquence) en l'exponentielle complexe de fréquence (ff), voisine de (F4) par l'opération de translation de fréquence (TFE) qui translate la fréquence (fn) en la fréquence (F4)
b) La réponse fréquentielle de l'opération de filtrage sélectif en fréquence (FSE), qui est effectuée à la fréquence (F4), est désignée par W(F4)
c) Le signal à analyser de fréquence (f) est modifié en amplitude et en phase, mais pas en fréquence, par la réponse fréquentielle W(F4)
d) Ce signal modifié par la réponse fréquentielle W(F4) peut alors être translaté par une opération (TF0) de translation de fréquence vers la fréquence zéro par multiplication par la séquence 1,-i,-1,+i,..., qui est la séquence exp<-i x 2 x PI x (-1/4)> qui correspond à la fréquence (-F4) (opération (2) de la partie (C)).
Nota : L'opération (TF0) de translation de fréquence vers la fréquence zéro par la multiplication par la séquence 1,i,-1,-i,... est une opération est une opération non mentionnée précédemment, et ne nécessite pas de multiplication et peut être réalisée uniquement avec des additions et des soustractions.

### Analyse de l'invention vue comme une opération de filtrage analogue à la TFG (signaux réels)

L'analyse précédente était relative à des signaux complexes, pour lesquels la fréquence (F4) peut être à l'intérieur de la bande passante utile du signal. Il est possible de réaliser une analyse similaire en signaux réels, en remplaçant les exponentielles complexes par des sinusoïdes de même fréquence et en remarquant que dans ce cas la fréquence (F4) doit être à l'extérieur de la bande utile du signal (ce qui peut être obtenu en sur-échantillonnant d'un facteur 2 le signal initial lorsque la bande passante utile du signal initial occupe une partie importante de la bande de fréquences allant de zéro à la moitié de la fréquence d'échantillonnage) :
a) La sinusoïde réelle de fréquence (f) est translatée (opération (0) de la partie (C), correspondant à la translation de fréquence (TFE) suivie de l'opération (FSE) de filtrage sélectif en fréquence) en la sinusoïde réelle de fréquence (ff), voisine de (F4) par l'opération de translation de fréquence (TFE) qui translate la fréquence (fn) en la fréquence (F4)
b) La réponse fréquentielle de l'opération de filtrage sélectif en fréquence (FSE), qui est effectuée à la fréquence (F4), est désignée par W(F4)
c) Le signal à analyser de fréquence (f) est modifié en amplitude et en phase, mais pas en fréquence, par la réponse fréquentielle W(F4)
d) Ce signal modifié par la réponse fréquentielle W(F4) peut alors être translaté par une opération (TF0) de translation de fréquence vers la fréquence zéro par multiplication par la séquence 1,0,-1,0,..., qui est la séquence cos(-i x 2 x PI x (-1/4)) qui correspond à la fréquence (-F4) (opération (2) de la partie (C)).
Nota : L'opération (TF0) de translation de fréquence vers la fréquence zéro par la multiplication par la séquence 1,0,-1, 0,... est une opération est une opération non mentionnée précédemment, et ne nécessite pas de multiplication et peut être réalisée uniquement avec des additions et des soustractions.

### Comparaison des analyses précédentes de la TFG et de l'invention dans le domaine fréquentiel

Pour effectuer une comparaison dans le domaine fréquentiel entre la TFG décrite dans la Référence 2 (voir Figure 25) et l'invention, on se place dans le cas où la pluralité (NF) des fréquences (FN) est l'ensemble des fréquences (fn) précédemment définies.

En référence aux processus décrits en Figure 27, on observe que pour une exponentielle complexe de fréquence (f) voisine d'une fréquence (fn) et différant d'une fréquence (df) par rapport à cette fréquence (fn), exp<-i x 2 x PI x (fn+df)> :
a) Pour la TFG :
   - L'opération (1) (la translation de fréquence (TFE) suivie de l'opération (FSE) de filtrage sélectif en fréquence) a pour résultat exp<-i x 2 x PI x (fn+df)> x (valeur de W(fn) à une fréquence différente de df de la fréquence centrale W(fn))
   - L'opération (2) (la translation de fréquence (TF0)) a pour résultat exp<-i x 2 x PI x (df)> x (valeur de W(fn) à une fréquence différente de df de la fréquence centrale (fn))
b) Pour l'invention (en signaux complexes) :
   - L'opération (0) a pour résultat exp<-i x 2 x PI x (F4+df)> x (valeur de W(F4) à une fréquence différente de df de la fréquence centrale (F4))
   - L'opération (2) a pour résultat exp<-i x 2 x PI x (df)> x (valeur de W(F4) à une fréquence différente de (df) de la fréquence centrale (F4))
   On constate donc que l'on obtient des résultats identiques si les réponses fréquentielles W(fn) et W(F4) ont la même forme et les mêmes valeurs, et ne diffèrent que par la fréquence centrale
c) Pour l'invention (en signaux réels) :
   - Il est possible de faire un calcul analogue à celui en signaux complexes en remplaçant les exponentielles complexes par des sinusoïdes de même fréquence, et en remarquant que la fréquence (F4) doit être à l'extérieur de la bande utile du signal (ce qui peut être obtenu en sur-échantillonnant d'un facteur 2 le signal initial lorsque la bande passante utile du signal initial occupe une partie importante de la bande de fréquences allant de zéro à la moitié de la fréquence d'échantillonnage), et en remarquant que l'opération de translation de fréquence (TFE) amène la fréquence (fn) à la fréquence (F4), et donc aussi la fréquence (f) = (fn)+(df) à la fréquence somme (F4)+(df) mais aussi à la fréquence différence (F4) - (df) - 2x(fn) :
      - L'opération (0) (la translation de fréquence (TFE) suivie de l'opération (FSE) de filtrage sélectif en fréquence) a pour résultat (cos(-i x 2 x PI x (F4+df)) + cos(-i x 2 x PI x (F4-df-2fn)) ) x (valeur de W(F4) à une fréquence différente de df de la fréquence centrale (F4)), résultat qui est en pratique égal à cos(-i x 2 x PI x (F4+df)) x (valeur de W(F4) à une fréquence différente de df de la fréquence centrale (F4)) en raison du filtrage à bande étroite autour de (F4)
      - L'opération (2) (la translation de fréquence (TF0)) a pour résultat (cos(-i x 2 x PI x (df)) + cos(-i x 2 x PI x (-df-2F4)) ) x (valeur de W(F4) à une fréquence différente de df de la fréquence centrale (F4))
   - On observe que la fréquence 2x(F4) est égale à la fréquence (F2), qui est la moitié de la fréquence d'échantillonnage, et que donc une opération de filtrage passe bas (FB4) avec une fréquence de coupure égale à (F4) fournira un résultat égal à (cos(-i x 2 x PI x (df)) x (valeur de W(F4) à une fréquence différente de df de la fréquence centrale (F4))

On constate donc, pour des signaux complexes, que lorsque la pluralité (NF) des fréquences (FN) est l'ensemble des fréquences (fn) définies ci-dessus les opérations définis dans l'invention de translations en fréquence (TFE) et de filtrage sélectif en fréquence (FSE), suivies d'opérations (TF0) de translation vers la fréquence zéro fournissent le même résultat qu'une Transformée de Fourier Glissante (TFG)

Pour des signaux réels, lorsque la bande passante utile du signal initial occupe une partie importante de la bande de fréquences allant de zéro à la moitié de la fréquence d'échantillonnage, le résultat est analogue avec toutefois la nécessité de :
- (avant les opérations (TFE) et FSE) ) sur-échantillonner le signal initial d'un facteur 2 pour que la fréquence (F4) doit être à l'extérieur de la bande utile du signal
- limiter les fréquences (fn) utilisées aux fréquences inférieures à la fréquence (F4)
- (après les opérations (TFE) et FSE) ) effectuer un filtrage passe-bas avec une fréquence de coupure égale à la fréquence (F4)

### Comparaison des analyses précédentes de la TFG et de l'invention dans le domaine temporel

Un raisonnement dans le domaine temporel, en comparant les réponses impulsionnelles de la TFG et de l'invention aboutit au même résultat.

Le calcul montre que la réponse impulsionnelle (pour une impulsion unité appliquée au temps zéro) d'une des branches du filtre de la Figure 25 (représentée par la partie (A) de la Figure 24) est la séquence w(n).

On peut vérifier directement ce résultat pour la fréquence (F4) :
- La séquence correspondant à l'exponentielle complexe pour la fréquence (F4) est : 1,+i,-1,-i,... et pour la fréquence (-F4) est : 1,-i,-1,+i,...
- La réponse impulsionnelle du filtre de réponse impulsionnelle w(n) x exp<i x (F4)> est donc : w(0), -iw(1), -w(2), +iw(3)
- La réponse de ce filtre après multiplication par l'exponentielle exp<i x (-F4)> est donc w(0), w(1), w(2), w(3)

Pour l'invention (voir partie (C) de la Figure 27) :
- On remarque que la réponse impulsionnelle d'un filtre dont la réponse fréquentielle est centrée autour de la fréquence (F4) peut s'exprimer sous la forme w(n) x exp<i x (F4)> (on peut notamment remarquer que w(n) est la réponse fréquentielle du filtre après translation vers la fréquence zéro et que w(n) x exp<i x (F4)> est donc la réponse du filtre après nouvelle translation à la fréquence (F4))
- L'opération (2) a pour résultat exp<-i x 2 x PI x (df)> x (valeur de W(F4) à une fréquence différente de df de la fréquence centrale (F4))
Nota : On a remarqué qu'en signaux complexes (c'est-à-dire avec (F4) à l'intérieur de la bande utile du signal) la réponse impulsionnelle pour l'invention était sous la forme w(n) x exp<i x (F4)>, identique à la réponse du filtre qui est le premier élément de la branche du filtre de la TFG décrit en partie (A) de la Figure 24.

On remarque aussi qu'en traduisant cette réponse impulsionnelle complexe en nombre réels on obtient la séquence : (w(0),0), (0,-w(1)), (-w(2),0), (0, +w(3)),.... qui peut se décomposer de la manière suivante :
- Partie réelle : w(0), 0, -w(2), 0
- Partie imaginaire : 0, -w(1), 0, +w(3)

Cette réponse impulsionnelle est calculée sur des signaux complexes, en opérant avec une fréquence (F4) à l'intérieur de la bande utile de fréquences du signal, et donc sans sur-échantillonnage du signal initial.

Les Figures 16 et 17 montrent deux exemples de réponses impulsionnelles (RIP) de l'invention pour les opérations (FSE) de filtrage sélectif en fréquence, calculées avec des signaux réels, en opérant avec une fréquence (F4) à l'extérieur de la bande utile de fréquences du signal, et donc après sur-échantillonnage d'un facteur 2 du signal initial.

En appelant w(n) l'enveloppe de chacune des réponses impulsionnelles (RIP) des Figures 16 et 17, et en tenant compte des fréquences d'échantillonnages respectives des Figures 16 et 17 d'une part, et de la réponse impulsionnelle en signaux complexes d'autre part, on est amené à faire la remarque importante suivante :
Les Figures 16 et 17 d'une part, et la réponse impulsionnelle en signaux complexes pour (F4) d'autre part, contiennent exactement la même information :
   - une enveloppe w(n) réelle
   - multipliée par la fréquence (F4)
avec toutefois la différence suivante :
   - l'information relative à la fréquence (F4) est en signaux réels dans les Figures 16 et 17, sous la forme : 1,0,-1,0, 1,0,-1,0...
   - cette même information est en signaux complexes pour la réponse impulsionnelle en signaux complexes sous la forme : (1,0), (0,-1), (-1,0), (0,+1) ...

### Les possibilités d'inversion de la TFG

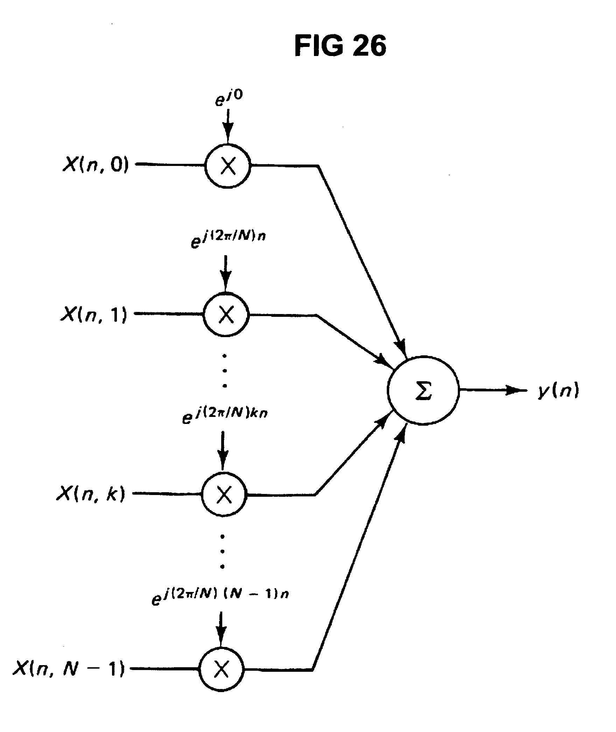

La Figure 26 (qui reprend la Figure 6.17 de la Référence 2) décrit , dans le cadre de la mise en oeuvre traditionnelle de la TFG, l'inversion de la TFG, c'est-à-dire la synthèse du signal original à partir des résultats de la TFG par la méthode appelée « Filter Bank Summation (FBS) Method ». Cette méthode (FBS) consiste à annuler la translation de fréquence effectuée en fin de traitement de chaque branche du filtre de la Figure 25 par l'exponentielle complexe de fréquence (fn) (voir aussi la partie (A) de la Figure 24) en faisant la translation par l'exponentielle complexe de fréquence opposée, c'est-à-dire de fréquence (-fn), et les conditions d'applicabilité de cette méthode en fonction des caractéristiques de l'enveloppe w(n) des filtres utilisés sont détaillées.

Dans le cadre de l'invention, il est nécessaire de procéder de manière voisine mais différente, en raison des opérations de translation de fréquence (FTE) qui ont translaté les différentes fréquences (fn) vers la fréquence commune (F4) : il est donc nécessaire de réaliser des opérations translations de fréquence (TFN) qui ramènent pour chaque branche du filtre la fréquence (F4) vers la fréquence (fn) initiale.

En se reportant à la Figure 27 et à l'analyse effectuée dans la section « ***Comparaison des analyses précédentes de la TFG et de l'invention dans le domaine fréquentiel »*** du présent document, pour l'invention (en signaux complexes) :
- L'opération (0) a pour résultat exp<-i x 2 x PI x (F4+df)> x (valeur de W(F4) à une fréquence différente de df de la fréquence centrale (F4))
- L'opération (2) a pour résultat exp<-i x 2 x PI x (df)> x (valeur de W(F4) à une fréquence différente de (df) de la fréquence centrale (F4))

Dans ce contexte, une opération de translations de fréquence (TFN) vers une fréquence (fn) réalisée par multiplication par une exponentielle complexe de fréquence (fn-F4) effectuée à la suite de l'opération (0) et à la place de l'opération (2) a comme résultat : $exp < - i x 2 x PI x \left(F⁢4+df\right) > x exp < - i x 2 x PI x \left(fn-F⁢4\right) > = exp < - i x 2 x PI x \left(fn+df\right) > ,$ qui correspond à la fréquence de départ avant l'opération (0)

Un calcul en signaux réels aboutit à un résultat analogue, avec comme dans l'analyse précédemment mentionnée, la nécessité d'un filtre passe-bas de fréquence de coupure égale à (F4) pour récupérer la fréquence initiale. On notera que ce filtre passe bas de fréquence de coupure (F4) peut être commun à toutes les branches du filtre.

On remarquera aussi que les conditions nécessaires pour l'invertibilité et relatives aux caractéristiques de l'enveloppe w(n) sont remplis par des filtres utilisés dans le care de l'invention, en particulier avec des fenêtres telles que celle de la Figure 27 ; il apparait donc la possibilité de reconstituer le signal d'origine à partir des signaux filtrés (SF) produits par la présente invention.

### 15) Les ressources nécessaires et le fonctionnement en continu

Il est un fait connu que le calcul de l'amplitude et de l'argument d'un nombre complexe à partir de ses coordonnées cartésiennes peut se faire de manière très économique et en virgule fixe avec un algorithme de type « CORDIC ».

Dans ces conditions, tous les calculs et toutes les opérations nécessaires à la mise en oeuvre du procédé, et en particulier l'opération d'analyse (ANA) peuvent se faire avec des ressources très limitées, et à une vitesse adaptée pour permettre un traitement en continu de l'ensemble des fréquences (FN) de la pluralité des fréquences (NF).

### 16) Avantages de l'invention

### Avantages généraux

Le procédé selon l'invention permet donc de oeuvre une pluralité (NF) de filtres sélectifs en fréquence (FS) fonctionnant en parallèle sur cette même pluralité (NF) de fréquences (FN) distinctes, permettant d'extraire la fréquence instantanée (FI), l'amplitude instantanée (AI), et la phase instantanée (PI) du signal filtré (SF), et de les relier de manière simple à ces mêmes paramètres pour chaque fréquence (FN) du signal d'entrée (SE) analysée.

Ces paramètres peuvent être évalués une fois pour chaque nouvel échantillon du signal d'entrée (SE), c'est-à-dire typiquement plusieurs milliers de fois par seconde pour un signal audio, et cela sous le contrôle d'un signal de contrôle (SC) qui donne une indication sur la validité des paramètres.

Ces résultats sont obtenus avec des moyens simples et avec des calculs en virgule fixe, sur des plates formes permettant de réaliser des systèmes embarqués.

Enfin, en utilisant des filtres fréquentiels sélectifs à réponse linéaire en phase, il est possible de réaliser tous les calculs et toutes les opérations avec des délais connus à l'avance, et qui permettent donc de situer précisément dans le temps les signaux d'entrée (SE) analysés.

### Comparaison de la nature des erreurs arithmétiques

Dans tout calcul effectué sur une plate forme physique de calcul, quelle qu'elle soit, la précision des calculs ne peut pas être infinie. Il est donc important d'analyser la nature et la position des erreurs arithmétiques pour en évaluer l'importance et la portée, qui peuvent être très différentes en fonction de la nature de ces erreurs.

Dans le cadre de mises en oeuvre de l'invention faisant appel exclusivement à des résonateurs (RS4) accordés sur la fréquence (F4), on peut remarquer que :
a) les opérations effectuées par le filtre en peigne (PE), les opérations effectuées par les résonateurs (RS4) et les opérations (TF0) de translation vers la fréquence zéro sont 100 % exactes si les représentations des nombres utilisés ont une taille suffisante
b) les opérations de translation de fréquence (TFE) ne peuvent pas être 100 % exactes, car les formes d'ondes de l'oscillateur local ne peuvent pas être 100 % exactes, même si elles peuvent avoir une très grande précision numérique

Les formes d'ondes utilisées les opérations de translation de fréquence (TFE) peuvent donc être analysées comme égales à la valeur exacte de l'onde plus une erreur résiduelle (ERO), dont la valeur est exactement connue, et les deux opérations suivantes sont mathématiquement équivalentes :
- Multiplier un signal supposé exact avec une forme d'onde contenant une erreur résiduelle (ERO) connue
- Multiplier une forme d'onde supposée exacte avec un signal contenant une erreur résiduelle (ERS), dont l'amplitude relative par rapport à celle signal est égale en première approximation à l'amplitude relative de l'erreur (ERO)

On voit donc que, dans ce contexte :
a) Les erreurs arithmétiques dans le cadre de l'invention correspondent uniquement à introduire à réaliser des opérations exactes sur un signal auquel s'ajoute une erreur résiduelle (ERS)
b) Ces erreurs résiduelles (ERS) peuvent être calculées de manière exacte, et dépendent directement de la précision des formes d'ondes utilisées par l'oscillateur local dans les opérations de translation de fréquence (TFE), précision qui peut être très grande
c) Il n'y a aucune erreur introduite dans un chemin de contre réaction (et qui pourrait donc s'accumuler), comme c'est le cas pour tout résonateur accordé sur une fréquence autre que (F4)
d) Il n'y a donc aucun problème de stabilité avec l'utilisation de résonateurs (RS4), alors que ces problèmes sont inévitables avec l'utilisation de résonateurs accorés sur d'autres fréquences

On remarquera par exemple que les composants programmables de type « FPGA » proposent dans leurs versions économiques des multiplieurs intégrés pouvant multiplier rapidement des valeurs signées de 18 positions binaires.

Dans les solutions traditionnelles en revanche :
- Pour une filtre à réponse finie, le nombre de multiplications est plus élevé : une multiplication par échantillon du signal et par coefficient du filtre
- Pour une filtre à réponse infinie, les erreurs arithmétiques du résultat peuvent être réinjectés dans les calculs (ce phénomène est d'autant plus marqué que les pôles du filtres sont proches du cercle unité), et a pour conséquence la difficulté notoire de l'analyse des erreurs dans les filtres à réponse infinie

### Comparaison quantitative de l'invention

Il est possible de comparer quantitativement l'invention, et plus spécifiquement sa capacité à calculer une Transformée de Fourier Glissante (TFG), avec le calcul d'une « Sliding DFT » (voir section 13.18 de la Référence 1), qui est le calcul, pour une fréquence donnée et pour chaque nouvel échantillon du signal en entrée, de la valeur actualisée d'une Transformée de Fourier Glissante (TFG).

L'objectif est de rendre le calcul, effectué en nombre complexes, le plus économique possible, notamment en termes d'additions et de multiplications réelles. Les mesures concerneront les nombres d'additions et de multiplications réelles nécessaires pour calculer une nouvelle valeur de la Transformée de Fourier suite à la prise en compte d'un nouvel échantillon du signal d'entrée.

La comparaison concernera des architectures pouvant avoir des applications concrètes :
- Pour la « Sliding DFT » : un dispositif à 3 résonateurs permettant de créer par des moyens fréquentiels une fenêtre temporelle de Hamming (45 dB environ de séparation avec les lobes secondaires), dans sa version dite « guaranteed stable », c'est à dire garantie stable ; voir Figures 13-50 et 13-49 de la Référence 1 pour une description du dispositif
- Pour l'invention : 2 structures présentant des caractéristiques similaires à la fenêtre de Hamming en termes de séparation avec les lobes secondaires, aussi dans des versions garanties stables :
   a) Une structure équivalente à 3 résonateurs en parallèle, voisine de celle de la Figure 13-50 de la Référence 1, réalisée selon l'architecture décrite dans la partie (B) de la Figure 23, et avec la même fenêtre de Hamming créée avec les mêmes moyens fréquentiels (mêmes calculs et mêmes coefficients)
   b) Une structure avec une fenêtre temporelle gaussienne, réalisée selon l'architecture décrite dans la Figure 21, avec une succession de 4 filtres en peigne (PE) et une succession de 4 résonateurs (RS4) en série. La séparation avec les lobes secondaires est 53 dB environ. (une structure similaire avec 3 filtres en peigne (PE) et 3 résonateurs (RS4) en série a une séparation avec les lobes secondaires de 40 dB environ. La réponse impulsionnelle des 4 filtres en peigne (PE) et 4 résonateurs (RS4) en série est analogue à celle décrite dans la Figure 17.

On remarquera (voir section précédente « ***Comparaison de la nature des erreurs arithmétique*** » ) qu'il n'est pas besoin du coefficient r de la « Sliding DFT » de la Référence 1 pour avoir des versions stables.

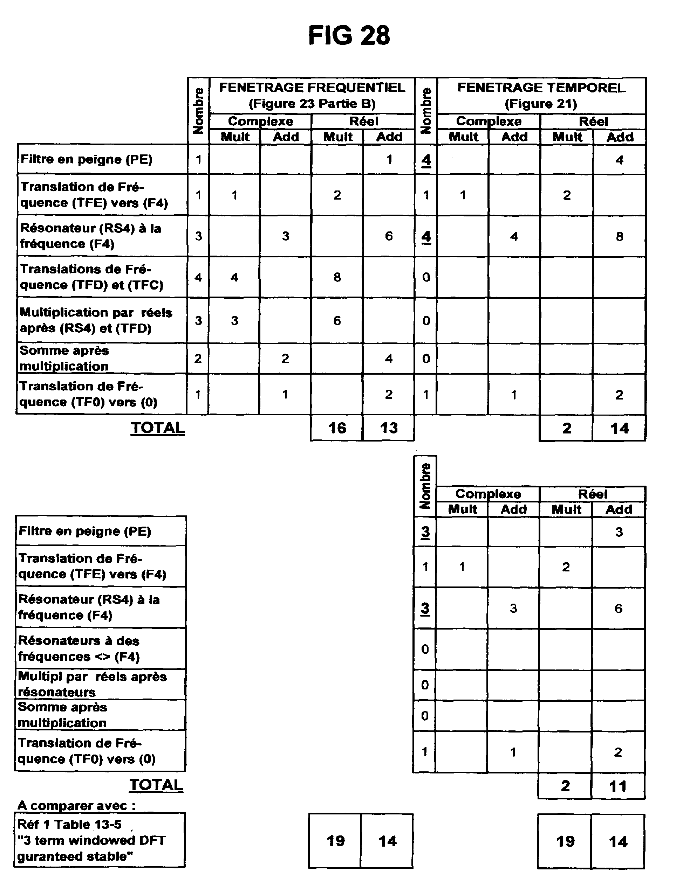

La Figure 28 est le tableau de comparaison des nombres d'opérations nécessaires pour l'actualisation de la Transformée de Fourier Glissante dans les différentes réalisations.

Les chiffres indiqués dans la Référence 1 (Table 13-5) sont de 19 multiplications réelles et 14 additions réelles.

Les nombres d'opérations ont été calculées de la manière suivante pour la structure a) de l'invention équivalente à 3 résonateurs en parallèle :
- Filtre en Peigne (signal réel) : 1 Addition
- Translation de Fréquence (TFE) vers la fréquence (F4) (signal réel) : 2 Multiplications (1 sinus + 1 cosinus)
- Résonateurs (RS4) accordés sur la fréquence (F4) : Multiplication par 0,+1,-1 des parties réelles et imaginaires, et addition : 2 Additions réelles et 3 résonateurs : 6 Additions
- Translations de fréquence (TFD) et (TFC) : 2 multiplications réelles par translation de fréquence, et 4 translations de fréquence (on remarque qu'à la fréquence (F4) une des parties réelles ou imaginaires du signal est toujours égale à zéro)soit 8 Multiplications
- Multiplication par 3 coefficients réels après les résonateurs : 6 Multiplications
- Somme de 3 nombres complexes (2 additions) : 4 Additions
- Translation de Fréquence (TF0) vers la fréquence (Zéro) : Multiplication par 0,+1,-1 des parties réelles et imaginaires, et addition : 2 Additions réelles (uniquement pour le résonateurs (RS4) central)

Les nombres d'opérations ont été calculées de la manière suivante pour la structure b) à 4 filtres en peigne (PE) et 4 résonateurs (RS4) en série de l'invention :
- Filtre en Peigne : 1 Addition réelle par filtre; pas de multiplication dans ce cas, car pas besoin de coefficient r car les calculs avec le résonateur (RS4) sont exacts
- Translation de Fréquence (TFE) vers la fréquence (F4) : 2 Multiplications (1 sinus + 1 cosinus)
- Résonateur (RS4) accordé sur la fréquence (F4) : Multiplication par 0,+1,-1 des parties réelles et imaginaires, et addition : 2 Additions réelles
- Translation de Fréquence (TF0) vers la fréquence (Zéro) : Multiplication par 0,+1,-1 des parties réelles et imaginaires, et addition : 2 Additions réelles

Les totaux sont les suivants :
a) « Sliding DFT » de la Référence 1 : 19 Multiplications + 14 Additions
b) Structure selon l'invention équivalente à 3 résonateurs en parallèle: 16 Multiplications + 9 Additions
c) Structure avec une fenêtre temporelle gaussienne (4 Filtres en Peigne + 4 Résonateurs (RS4) : 2 Multiplications + 14 Additions
d) Structure avec une fenêtre temporelle gaussienne (3 Filtres en Peigne + 3 Résonateurs (RS4) : 2 Multiplications + 11 Additions

On remarquera le rôle important de l'utilisation du résonateur (RS4) pour obtenir des gains en termes de nombre de multiplications :
- Pour la structure équivalente à 3 résonateurs en parallèle, volontairement proche de la structure traditionnelle, une diminution de l'ordre de 20 % pour les multiplications et de 33% pour les additions, malgré les opérations de translation de fréquence (TFE) et (TF0) spécifiques à l'invention
- L'utilisation exclusive de résonateurs (RS4) dans la structure avec fenêtre temporelle gaussienne suffit à obtenir un gain très important en termes de multiplications malgré les opérations de translation de fréquence (TFE) et (TF0) spécifiques à l'invention

### Plates formes de calcul (PC) préférentielles

Il est connu que certains types de filtres, tels que les filtres en peigne ou les filtres récursifs pour le calcul de moyennes (qui en sont proches) sont de préférence à mettre en oeuvre avec des calculs en nombres entiers, c'est-à-dire en virgule fixe. Les résonateurs (RS4) accordés sur la fréquence (F4) sont aussi adaptés pour travailler en nombres entiers.

En conséquence, la mise en oeuvre de l'invention est réalisée de manière avantageuse avec des calculs en virgule fixe, en particulier en cas d'utilisations exclusive de résonateurs (RS4) accordés sur la fréquence (F4).

## Revendications

1. Procédé d'analyse d'un signal initial (SI), représentatif d'une onde qui se propage dans un milieu physique, pour fournir des paramètres caractéristiques dudit signal initial, ledit procédé étant mis en oeuvre sur une plate-forme (PC) de calcul, par un banc de filtres mettant en oeuvre une pluralité (NF) de filtres sélectifs en fréquence (FSF), de fréquences centrales (FN) distinctes, opérant sur des échantillons d'un signal d'entrée (SE) obtenu par échantillonnage à une fréquence d'échantillonnage (FE) constante à partir du signal initial (SI), comprenant les étapes suivantes:
a) Des opérations de pré-traitement pour transformer les échantillons du signal d'entrée (SE) en une séquence d'échantillons (SM)
b) Une pluralité (NF) d'opérations de translation de fréquence (TFE), correspondant chacune à une des fréquences (FN) analysées de la pluralité (NF) des fréquences, adaptée chacune à changer cette fréquence (FN) en la fréquence (F4),égale au quart de la fréquence d'échantillonnage (FE), et fournissant une pluralité (NF) de signaux (ST) translatés en fréquence vers la fréquence (F4) à partir de la séquence d'échantillons (SM)
c) Une pluralité (NF) d'opérations de filtrage sélectif en fréquence (FSE), portant sur chacun des signaux (ST) translatés en fréquence de la pluralité (NF) de ces signaux, et réalisée chacune à la fréquence (F4) et fournissant une pluralité (NF) de signaux filtrés (SF), chacun de ces signaux filtrés (SF) possédant une bande de fréquence (BF) centrée sur la fréquence (F4)
d) Une pluralité (NF) d'opérations (EXP) d'extractions de paramètres (PA) à partir de la pluralité des signaux filtrés (SF), incluant pour chacun des signaux filtrés (SF) l'estimation d'au moins un des paramètres parmi :
- la phase instantanée (PI)
- l'amplitude instantanée (AI)
- la fréquence instantanée (FI)
- la Transformée de Fourier Glissante (TFG)

2. Procédé selon la revendication 1 dans lequel l'étape a) comprend un filtrage fréquentiel et/ou un sur-échantillonnage adaptés pour limiter la fréquence maximum (FB) du signal d'entrée (SE) à une fréquence maximum (FB) inférieure à la dite fréquence (F4)

3. Procédé selon l'une des revendications 1 ou 2 dans lequel la Transformée de Fourier Glissante (TFG) est réalisée au moyen de l'étape supplémentaire suivante :
e) Une pluralité (NF) d'opérations de translation de fréquence (TF0), réalisées sur la pluralité (NF) de signaux filtrés (SF) réels possédant une bande de fréquence (BF) centrée sur la fréquence (F4), adaptée chacune à changer la fréquence (F4) en la fréquence zéro

4. Procédé selon l'une des revendications 1 à 3 dans lequel l'étape c) consistant en la pluralité (NF) d'opérations de filtrage sélectif en fréquence (FSE) est réalisée en deux étapes :
c1) Une étape de pré-filtrage (PFC) réalisée sur le signal d'entrée (SE) réel avant toute opération de translation en fréquence (TFE)
c2) Une étape de filtrage en fréquence (FFR) réalisée sur chacun des signaux (ST) réels translatés en fréquence de la pluralité (NF) de ces signaux

5. Procédé selon la revendication 4 dans lequel l'étape de pré-filtrage (PFC) est réalisée au moyen d'un filtre en peigne (PE) ou d'une succession de (NP) filtres en peigne (PE), et l'étape de filtrage en fréquence (FFR) est réalisée au moyen d'une pluralité de résonateurs (RS4) ou d'une pluralité de successions de (NR) résonateurs (RS4) chacun accordé sur la fréquence (F4), et dans lequel :
i) Pour chacune des fréquences (FN) analysées, le nombre (NP) de filtres en peigne d'une succession de (NP) filtres en peigne (PE) est égal au nombre (NR) de résonateurs d'une succession de (NR) résonateurs (RS4)
ii) les zéros en fréquence du filtre en peigne (PE) incluent chacune des fréquences (FN) analysées de la pluralité (NF) des fréquences
iii) Chaque opération de translation de fréquence (TFE), correspondant chacune à une des fréquences (FN) analysées de la pluralité (NF) des fréquences, est adaptée à changer les zéros en fréquence du filtre en peigne (PE) en la fréquence (F4) des résonateurs (RS)

6. Procédé selon l'une des revendications 1 à 5 dans lequel des résonateurs (RSD), accordés sur des fréquences (FD) voisines de (F4) opèrent en parallèle avec un résonateur (RS4) afin de réaliser par des moyens fréquentiels un fenêtrage temporel

7. Procédé selon la revendication 6 dans lequel chaque résonateur (RSD) accordé sur une fréquence (FD) voisine de (F4) est remplacé par un résonateur (RS4), précédé d'une opération de translation de fréquence (TFD) adaptée pour translater la fréquence (F4) à la fréquence (FD) de chaque résonateur (RSD) remplacé et suivi d'une opération de translation de fréquence (TFC) adaptée pour translater la fréquence (FD) à la fréquence (F4) ou la fréquence zéro

8. Procédé selon l'une des revendications 1 à 7 dans lequel les bandes passantes (BF) utilisées dans les opérations de filtrage sélectif en fréquence (FSE) ont une largeur adaptée pour que les séquences d'échantillons filtrés (SF) produites en sortie de ces opérations pour chacune des fréquences (FN) de la pluralité (NF) de fréquences contiennent chacune essentiellement une seule composante fréquentielle du signal d'entrée (SE)

9. Procédé selon l'une des revendications 1 à 8 dans lequel la fréquence instantanée (FI) d'un signal filtré (SF) est mesurée à partir de la différence de mesures successives de la phase instantanée (PI) du signal filtré (SF)

10. Procédé selon l'une des revendications 1 à 9 dans lequel l'ensemble des opérations est effectué à une vitesse adaptée pour permettre un traitement en continu de l'ensemble des fréquences (FN) de la pluralité des fréquences (NF)

11. Dispositif d'analyse d'un signal comprenant :
a) un capteur (CA) générant un signal initial (SI)
b) une plate-forme de calcul (PC) reliée au capteur (CA) et adaptée pour mettre en oeuvre le procédé selon l'une quelconque des revendications précédentes

12. Dispositif selon la revendication 11 et tel que la plate-forme de calcul (PC) est adaptée à des calculs en virgule fixe

## Patentansprüche

1. Verfahren zur Analyse eines Ausgangssignals (SI), das für eine Welle repräsentativ ist, die sich in einem physischen Medium ausbreitet, um Parameter zu liefern, die für das Ausgangssignal charakteristisch sind, wobei das Verfahren auf einer Rechenplattform (PC) durch eine Filterbank eingesetzt wird, die eine Vielzahl (NF) von selektiven Frequenzfiltern (FSF) mit unterschiedlichen Zentralfrequenzen (FN) einsetzt, die auf Proben eines Eingangssignals (SE) wirken, das durch Probenahme mit einer konstanten Probenahmefrequenz (FE) aus dem Ausgangssignal (SI) erhalten wird, umfassend die folgenden Schritte:
a) Vorbehandlungsschritte, um die Proben des Eingangssignals (SE) in eine Probesequenz (SM) umzuformen;
b) eine Vielzahl (NF) von Frequenztranslationsschritten (TFE), jeweils entsprechend einer der analysierten Frequenzen (FN) aus der Vielzahl (NF) der Frequenzen, jeweils dazu angepasst, diese Frequenz (FN) in die Frequenz (F4) gleich einem Viertel der Probefrequenz (FE) zu ändern, wobei sie eine Vielzahl (NF) von zu der Frequenz (F4) frequenzverschobenen Signalen (ST) aus der Probesequenz (SM) liefert;
c) eine Vielzahl (NF) von selektiven Frequenzfilterschritten (FSE), die jedes der frequenzverschobenen Signale (ST) aus der Vielzahl (NF) dieser Signale betreffen und jeweils auf der Frequenz (F4) ausgeführt werden und eine Vielzahl (NF) von gefilterten Signalen (SF) liefern, wobei jedes dieser gefilterten Signale (SF) ein auf der Frequenz (F4) zentriertes Frequenzband (BF) besitzt;
d) eine Vielzahl (NF) von Schritten (EXP) zur Extraktion von Parametern (PA) aus der Vielzahl von gefilterten Signalen (SF), umfassend für jedes der gefilterten Signale (SF) die Bewertung mindestens eines der Parameter unter:
- momentane Phase (PI)
- momentane Amplitude (AI)
- momentane Frequenz (FI)
- gleitende Fourier-Transformation (TFG).

2. Verfahren nach Anspruch 1, bei dem der Schritt a) eine Frequenzfilterung und/oder eine Über-Probenahme umfasst, die dazu geeignet sind, die maximale Frequenz (FB) des Eingangssignals (SE) auf eine maximale Frequenz (FB) unter der Frequenz (F4) zu begrenzen.

3. Verfahren nach einem der Ansprüche 1 oder 2, bei dem die gleitende Fourier-Transformation (TFG) mit Hilfe des folgenden Zusatzschrittes durchgeführt wird:
e) einer Vielzahl (NF) von Frequenztranslationsschritten (TF0), die auf der Vielzahl (NF) von realen gefilterten Signalen (SF) durchgeführt werden, die ein auf die Frequenz (F4) zentriertes Frequenzband (BF) besitzen, jeweils dazu angepasst, die Frequenz (F4) in die Nullfrequenz zu ändern.

4. Verfahren nach einem der Ansprüche 1 bis 3, bei dem der Schritt c), der in der Vielzahl (NF) von selektiven Frequenzfilterschritten (FSE) besteht, in zwei Schritten ausgeführt wird:
c1) einem Vorfilterschritt (PFC), der auf dem realen Eingangssignal (SE) vor jedem Frequenztranslationsschritt (TFE) durchgeführt wird;
c2) einem Frequenzfilterschritt (FFR), der auf jedem der frequenzverschobenen realen Signale (ST) aus der Vielzahl (NF) dieser Signale durchgeführt wird.

5. Verfahren nach Anspruch 4, bei dem der Vorfilterschritt (PFC) mit Hilfe eines Kammfilters (PE) oder einer Aufeinanderfolge (NP) von Kammfiltern (PE) erfolgt, und der Frequenzfilterschritt (FFR) mit Hilfe einer Vielzahl von Resonatoren (RS4) oder einer Vielzahl von Aufeinanderfolgen (NR) von Resonatoren (RS4) erfolgt, jeweils abgestimmt auf die Frequenz (F4), wobei:
i) für jede der analysierten Frequenzen (FN) die Anzahl (NP) von Kammfiltern einer Aufeinanderfolge (NP) von Kammfiltern (PE) gleich der Anzahl (NR) von Resonatoren einer Aufeinanderfolge (NR) von Resonatoren (RS4) ist;
ii) die Frequenznullen des Kammfilters (PE) jeweils analysierte Frequenzen (FN) aus der Vielzahl (NF) der Frequenzen einschließen;
iii) jeder Frequenztranslationsschritt (TFE) entsprechend jeweils einer der analysierten Frequenzen (FN) aus der Vielzahl (NF) der Frequenzen dazu geeignet ist, die Frequenznullen des Kammfilters (PE) in die Frequenz (F4) der Resonatoren (RS) zu ändern.

6. Verfahren nach einem der Ansprüche 1 bis 5, bei dem die Resonatoren (RSD), die auf benachbarte Frequenzen (FD) von (F4) abgestimmt sind, parallel mit einem Resonator (RS4) wirken, um durch Frequenzmittel ein Zeitfenster herzustellen.

7. Verfahren nach Anspruch 6, bei dem jeder Resonator (RSD), der auf eine benachbarte Frequenz (FD) von (F4) abgestimmt ist, durch einen Resonator (RS4) ausgetauscht wird, dem ein Frequenztranslationsschritt (TFD) vorhergeht, der dazu geeignet ist, die Frequenz (F4) auf die Frequenz (FD) jedes ausgetauschten Resonators (RSD) zu verschieben, gefolgt von einem Frequenztranslationsschritt (TFC), der dazu geeignet ist, die Frequenz (FD) auf die Frequenz (F4) oder die Nullfrequenz zu verschieben.

8. Verfahren nach einem der Ansprüche 1 bis 7, bei dem die Bandbreiten (BF), die bei den selektiven Frequenzfilterschritten (FSE) verwendet werden, eine Breite haben, die dazu angepasst ist, dass die gefilterten Probesequenzen (SF), die am Ausgang dieser Schritte für jede der Frequenzen (FN) aus der Vielzahl (NF) von Frequenzen erzeugt werden, jeweils im Wesentlichen ein einzige Frequenzkomponente des Eingangssignals (SE) enthalten.

9. Verfahren nach einem der Ansprüche 1 bis 8, bei dem die momentane Frequenz (FI) eines gefilterten Signals (SF) aus der Differenz von aufeinanderfolgenden Messungen der momentanen Phase (PI) des gefilterten Signals (SF) gemessen wird.

10. Verfahren nach einem der Ansprüche 1 bis 9, bei dem die Gesamtheit der Schritte mit einer Geschwindigkeit durchgeführt wird, die angepasst ist, eine kontinuierliche Bearbeitung der Gesamtheit der Frequenzen (FN) aus der Vielzahl der Frequenzen (NF) zu ermöglichen.

11. Vorrichtung zur Analyse eines Signals, umfassend:
a) einen Fühler (CA), der ein Ausgangssignal (SI) erzeugt;
b) eine Rechenplattform (PC), die mit dem Fühler (CA) verbunden und dazu angepasst ist, das Verfahren nach einem der vorhergehenden Ansprüche einzusetzen.

12. Vorrichtung nach Anspruch 11, bei der die Rechenplattform (PC) dazu angepasst ist, Festpunktberechnungen durchzuführen.

## Claims

1. Method for selective filtering in the frequency domain implementing a plurality (NF) of frequency selective filters (FS) operating in parallel on the same plurality (NF) of distinct frequencies (FN), each having a pass band (BF), and operating on samples of an input signal (SE), sampled with a sampling frequency (FE), the frequency band of which is comprised between a minimum frequency (FA) and a maximum frequency (FB), and comprising the following steps:
a) Preprocessing operations in order to transform samples of the input signal (SE) into a sample sequence (SM)
b) A plurality (NF) of frequency translation operations (TFE), each one corresponding to one of the analyzed frequencies (FN) from the plurality (NF) of frequencies, each one being adapted to change this frequency (FN) into the frequency (F4), equal to a quarter of the sampling frequency (FE), and providing a plurality (NF) of signals (ST) translated in frequency to the frequency (F4) from the sample sequence (SM)
c) A plurality (NF) of frequency selective filtering operations (FSE), operating on each of the signals (ST) translated in frequency from the plurality (NF) of these signals, and performed each at the frequency (F4) and providing a plurality (NF) of filtered signals (SF), each of these filtered signals (SF) having a frequency bandwidth (BF) centered on the frequency (F4)
d) A plurality (NF) of extraction operations (EXP) of parameters (PA) on the basis of the plurality of filtered signals (SF), including for each of the filtered signals (SF) the estimation of at least one of the parameters among:
- Instantaneous phase (PI)
- Instantaneous amplitude (AI)
- Instantaneous frequency (FI)
- Sliding Fourier Transform (TFG)

2. Method according to claim 1 in which step a) comprises a frequency domain filtering and/or an up sampling operation adapted to limit the maximum frequency (FB) of the input signal (SE) to a maximum frequency (FB) less than said frequency (F4)

3. Method according to claims 1 or 2 in which Sliding Fourier Transform (TFG) is implemented by means of the following additional step:
e) A plurality (NF) of frequency translation operations (TF0), operating on the plurality (NF) of real filtered signals (SF) having a frequency bandwidth (BF) centered on the frequency (F4), each one being adapted to translate frequency (F4) into zero frequency

4. Method according to claims 1 to 3 in which step c) comprising the plurality (NF) of frequency selective filtering operations (FSE) is implemented in two steps:
c1) A prefiltering step (PFC) operating on real input signal before any frequency translation operation (TFE)
c2) A frequency domain filtering step (FFR) operating on each of the real signals translated in frequency (ST) from the plurality (NF) of such signals

5. Method according to claim 4 in which the prefiltering step (PFC) is implemented by means of a comb filter (PE) or a sequence of (NP) comb filters (PE), and frequency domain filtering step (FFR) is implemented by means of a plurality of resonators (RS4) or a plurality of sequences of (NR) resonators (RS4) each tuned on frequency (F4), and in which:
i) For each one of the analyzed frequencies (FN), the number (NP) of comb filters in a sequence of (NP) comb filters (PE) is equal to the number (NR) of resonators in a sequence of (NR) resonators (RS4)
ii) The frequency zeroes of the comb filters (PE) include each of the analyzed frequencies (FN) of the plurality (NF) of frequencies
iii) Each frequency translation operation (TFE), corresponding each to one of the analyzed frequencies (FN) from the plurality (NF) of frequencies, is adapted to changing the frequency zeroes of the comb filter (PE) into the frequency (F4) of resonators (RS)

6. Method according to claims 1 to 5 in which resonators (RSD), tuned on frequencies (FD) close to (F4) operate in parallel with a resonator (RS4) so as to implement in frequency domain a time domain windowing

7. Method according to claim 6 in which each resonator (RSD) tuned on a frequency (FD) close to (F4) is replaced by a resonator (RS4), preceded by a frequency translation operation (TFD) adapted to translate the frequency (F4) into frequency (FD) of each resonator (RSD) that is replaced and followed by a frequency translation operation (TFC), adapted to translate frequency (FD) to the frequency (F4) or to frequency zero

8. Method according to claims 1 to 7 in which frequency pass bands (BF) used in frequency selective filtering operations (FSE) have a width adapted so that the sequences of filtered samples (SF) produced as an output of these operations for each frequency (FN) of the plurality (NF) of frequencies contain each essentially only one frequency domain component of the input signal (SE)

9. Method according to claims 1 to 8 in which instantaneous frequency (FI) of a filtered signal (SF) is measured on the basis of the difference of successive measures of the instantaneous phase (PI) of filtered signal (SF)

10. Method according to claims 1 to 9 in which the set of operations are executed with a speed adapted to allow a continuous processing of all frequencies (FN) from the plurality of frequencies (NF).

11. Signal analysis device comprising:
a) a sensor (CA) generating an initial signal (SI)
b) a computing platform (PC) connected to the sensor (CA) and adapted to implement the method according to any of the previous claims

12. Device according to claim 11 and such as the computing platform (PC) is adapted to fixed point computations
